# EUROPEAN PATENT APPLICATION

(11) **EP 4 530 883 A2**
(43) Date of publication of application: **02.04.2025**
(21) Application number: 24195969.1
(22) Date of filing: 22.08.2024
(51) Int. Cl.: G06F 16/3329, G06F 16/9032

(54) **STATE MACHINE BACKED LLM AGENTS**

(30) Priority: 29.09.2023 US 202363586729 P; 15.12.2023 US 202363611047 P; 05.08.2024 US 202418794904
(71) Applicant: Palantir Technologies Inc., Denver, CO 80202 (US)
(72) Inventor: BEIL, Johannes, Denver, CO 80202 (US); TYSHEVSKYI, Pavlo, Denver, CO 80202 (US); SCHRADER, Max-Philipp, Denver, CO 80202 (US); KRISHNAN, Sriram, Denver, CO 80202 (US); ZULLO, Michael, Denver, CO 80202 (US); HEERJEE, Rushad, Denver, CO 80202 (US); MUKHERJEE, Anirvan, Denver, CO 80202 (US)
(74) Representative: Jolliffe, Jack Louis

(57) **Abstract**

Computer-implemented systems and methods are disclosed, including systems and methods for automatically solving problems. A computer-implemented method may include: by an agent service configured to interact with an LLM to complete a run: providing an LLM with access to a state machine, executing an initial state of the state machine with the LLM, determining a subsequent state of the state machine based on at least an initial LLM output, and executing the subsequent state of the state machine.

## Description

### CROSS-REFERENCE TO RELATED APPLICATIONS

Any and all applications for which a foreign or domestic priority claim is identified in the Application Data Sheet as filed with the present application are hereby incorporated by reference under 37 CFR 1.57 for all purposes and for all that they contain.

### TECHNICAL FIELD

The present disclosure relates to systems and techniques for utilizing computer-based models. More specifically, the present disclosure relates to computerized systems and techniques for solving problems using artificial intelligence powered agents including retrieval and processing of datasets.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Computers can be programmed to perform calculations and operations utilizing one or more computer-based models. For example, agents (e.g., artificial intelligence (AI) powered agents) can be deployed by computing systems to solve various computational tasks and problems.

### SUMMARY

The systems, methods, and devices described herein each have several aspects, no single one of which is solely responsible for its desirable attributes. Without limiting the scope of this disclosure, several non-limiting features will now be described briefly.

The present disclosure relates to systems and methods (generally collectively referred to herein as "an agent system" or simply a "system") that can advantageously overcome various of the technical challenges mentioned above, among other technical challenges. The present disclosure further includes various processes, functionality, and interactive graphical user interfaces related to the system. According to various implementations, the system (and related processes, functionality, and interactive graphical user interfaces), can advantageously employ state machines to solve complex problems. A state machine may comprise a plurality of states each comprising a discrete set of information (e.g., tools available at that state, potential next states, etc.). Advantageously, the agent system executes a state machine to control interactions with an LLM which may reduce hallucinations, reduce the amount of time required to solve a problem, reduces the information that needs to be provided to the LLM since the complex process is broken down in independent steps, and/or reduce the number of interactions with an LLM. Further, the system may provide user interface(s) that allow users to track or monitor problem solving processes went through by agents to evaluate the soundness of steps taken or decisions made by agents. The system may further allow users to configure agents and/or state machines based on various user objectives to enhance scalability and reusability of the system.

Various embodiments of the present disclosure provide improvements to various technologies and technological fields. For example, as described above, the system may advantageously utilize state machine-backed agents to provide a guided framework to automatically solve more complex problems more efficiently and more accurately thereby improving performance of the system. Other technical benefits provided by various embodiments of the present disclosure include, for example, providing user interfaces to allow users to track or monitor problem solving processes went through by agents to facilitate efficient evaluation on performances of agents and/or to facilitate generating state machines for subsequent use. Embodiments of the disclosure provide efficient use of data storage during complex multi-stage processes by deleting previously processed data at suitable stages of a state machine.

Additionally, various embodiments of the present disclosure are inextricably tied to computer technology. Various embodiments rely on detection of user inputs via graphical user interfaces, calculation of updates to displayed electronic data based on those user inputs, automatic processing of related electronic data, application of language models and/or other artificial intelligence, and presentation of the updates to displayed information via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various embodiments cannot reasonably be performed by humans alone, without the computer technology upon which they are implemented. Further, the implementation of the various embodiments of the present disclosure via computer technology enables many of the advantages described herein, including more efficient interaction with, and presentation of, various types of electronic data.

According to various implementations, large amounts of data are automatically and dynamically calculated interactively in response to user inputs, and the calculated data is efficiently and compactly presented to a user by the system. Thus, in some implementations, the user interfaces described herein are more efficient as compared to previous user interfaces in which data is not dynamically updated and compactly and efficiently presented to the user in response to interactive inputs.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions that may provide reduced mental workloads, improved decision-making, reduced work stress, and/or the like, for a user. For example, user interaction with the interactive user interface via the inputs described herein may provide an optimized display of, and interaction with, models and model-related data, and may enable a user to more quickly and accurately access, navigate, assess, and digest the model-related data than previous systems.

Further, the interactive and dynamic user interfaces described herein are enabled by innovations in efficient interactions between the user interfaces and underlying systems and components. For example, disclosed herein are improved methods for employing agents to automatically solve complex problems through state machine-backed agents. Advantageously, the system enables an agent to execute a state machine to control interactions with an LLM which may reduce hallucinations, reduce the amount of time required to solve a problem, and/or reduce the number of interactions with an LLM. Additionally, the system may provide user interface(s) that allow users to track or monitor problem solving processes went through by agents to evaluate the soundness of steps taken or decisions made by agents, or further allow users to configure agents based on various user objectives to enhance scalability and reusability of the system.

Thus, various implementations of the present disclosure can provide improvements to various technologies and technological fields, and practical applications of various technological features and advancements. For example, as described above, existing computer-based model management and integration technology is limited in various ways, and various implementations of the disclosure provide significant technical improvements over such technology. Additionally, various implementations of the present disclosure are inextricably tied to computer technology. In particular, various implementations rely on operation of technical computer systems and electronic data stores, automatic processing of electronic data, and the like. Such features and others (e.g., processing and analysis of large amounts of electronic data, management of data migrations and integrations, and/or the like) are intimately tied to, and enabled by, computer technology, and would not exist except for computer technology. For example, the interactions with, and management of, computer-based models described below in reference to various implementations cannot reasonably be performed by humans alone, without the computer technology upon which they are implemented. Further, the implementation of the various implementations of the present disclosure via computer technology enables many of the advantages described herein, including more efficient management of various types of electronic data (including computer-based models).

Various combinations of the above and below recited features, embodiments, implementations, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise a computer-readable storage medium having program instructions embodied therewith, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising a computer-readable storage medium are disclosed, wherein the computer-readable storage medium has program instructions embodied therewith, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1A is a block diagram illustrating an example agent system in an example computing environment;
FIG. 1B depicts an example block diagram of the agent system of FIG. 1A, where the agent system can be utilized to automatically solve complex problems received from users;
FIG. 2A illustrates an object-centric conceptual data model, according to various embodiments of the present disclosure;
FIG. 2B is a block diagram illustrating an example interaction data object in accordance with various embodiments of the present disclosure;
FIG. 3 is a block diagram illustrating an example state machine;
FIG. 4 is a flowchart illustrating an example process for implementing a state-machine backed LLM agent;
FIG. 5 illustrates an example user interface for monitoring the operations of a state-machine backed LLM agent during a run;
FIG. 6 illustrates an example user interface for managing a state machine;
FIG. 7 is a flowchart illustrating an example process for promoting agent operations to a state machine;
FIG. 8 is a block diagram of an example computer system consistent with various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

To facilitate an understanding of the systems and methods discussed herein, several terms are described below and throughout this specification. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

The term "**agent**," as used in the present disclosure, can refer to a decision-making entity that is designed to be specialized at solving a class of problems. The class of problems that a particular agent can solve can include simple (e.g., sending a single request to a large language model (LLM) service) or more complex ones (e.g., chaining a set of tools behind each other in a dynamic fashion to solve a complex problem). In some implementations, a agent can be defined by a specific combination of building blocks including one or more of: (1) agent logic: a core programmatic definition on how this specific agent should interact with the available tools, configurations, and the user; (2) tools: a defined set of tools available for the specific agent; (3) guardrails: a core security mechanism to control the interaction of the agent with the system, such as permissions regarding ontology access; and (4) agent storage (herein also referred to as "agent memory"): a data store and/or memory space allowing an individual agent to keep track of relevant information (e.g., messages and accessories) during and across runs.

The term "**configuration**," as used in the present disclosure, can refer to a version-controlled specification of pointers to the building blocks of an agent and/or versions of the building blocks. For example, an agent can be configured to a specific configuration that associates the agent with a specific ontology, a LLM, one or more tools, one or more accessories, or the like.

The term "**coordinator**," as used in the present disclosure, can refer to an entity that manages interactions among other entities. For example, the term "agent coordinator" can refer to an entity that manages interactions among agents deployed by an agent system. The agent coordinator may serve a role similar to a control tower to ensure agents act in coordination with each other in an intentional manner. For example, an agent coordinator may supervise handoffs of problems, tasks, or sub-tasks among agents to ensure handoffs are robustly performed and do not interfere with processing of other tasks or sub-tasks.

The term "**tool**," as used in the present disclosure, can refer to a specific capability that is available to an agent to solve a given problem. In its core, a tool may be mostly responsible to perform a deterministic action. A tool may allow an agent to interact with the operational system, an ontology, internal databases and system, and/or external systems. A tool can be any set of logic or rules that can be provided to an agent for the agent's use, such as to obtain additional information by generating a request for access to additional data via a plug-in. Thus, a tool can be used by an agent to generate requests (that may be fulfilled by the system) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. Example tools include ontology function tool, date/time tool, query objects tool, calculator tool, and apply action tool. Tools, or the set of logic they comprise for performing one or more operations, may be defined by a system, external database, ontology and/or a user.

The term "**run**," as used in the present disclosure, can refer to a full interaction of a user with an agent system in performance of a task, such as one or more interactions with an LLM and/or external data source. An individual run can refer to a full interaction of the user with the agent system, or a user session operated by the user. Information associated with a run may be stored by an agent system to facilitate automation orientation and/or co-pilot orientation. The information related to the individual run may include the initial prompt and subsequent prompts received by the agent from the user, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like.

The term "**accessory**," as used in the present disclosure, can refer to any information may be useful or necessary for agents to process tasks. An accessory may be known to be correct to an agent system. Accessories may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. An accessory may be permissioned and/or subject to various security constraints such that the accessory may be accessible to some agents but inaccessible to other agents. Accessories may be generated or created by agents during processing tasks, but may also be provided by users based on demands of users. Example accessories may include: (a) the calculated sum of items in an inventory, (b) an identification (ID) of a document containing needed information, (c) a result of a system operation, such as creation of a new user, (d) a result of execution of a tool, (e) an LLM output. Accessories may be stored as Objects in an ontology or in other data formats. Accessories may be multi-modal. Accessories can be of simple types, such as string, double, integer, or the like, and can also be of more complex types, such as images, dataframes, sound files, or the like. Accessories can be created by agents and/or by users of an agent system. For example, as part of executing a run, an agent may utilize a set of tools to create new accessories. As another example, before starting a run, users can select relevant existing accessories and/or create new accessories that contain relevant information for the specific problems to be solved. An agent system can track a lineage of an accessory to know, for example, which accessories were used by which tools to create the accessory.

The term "**model**," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like. A "nondeterministic model" as used in the present disclosure, is any model in which the output of the model is not determined solely based on an input to the model. Examples of nondeterministic models include language models such as LLMs, ML models, and the like.

A "**language model** is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A Large Language Model ("**LLM**") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. LLMs may work by taking an input text and repeatedly predicting the next word or token (e.g., a portion of a word, a combination of one or more words or portions of words, punctuation, and/or any combination of the foregoing and/or the like). An LLM may be of any type, including a Question Answer ("QA") LLM that may be optimized for generating answers from a context, a multimodal LLM/model, and/or the like. An LLM (and/or other models of the present disclosure) may include, for example, a NN trained using self-supervised learning and/or semi-supervised learning, a feedforward NN, a recurrent NN, and/or the like. An LLM (and/or other models of the present disclosure) may further include, for example, attention-based and/or transformer architecture or functionality.

While certain aspects and implementations are discussed herein with reference to use of a language model, LLM, and/or AI, those aspects and implementations may be performed by any other language model, LLM, AI model, generative AI model, generative model, ML model, NN, multimodal model, and/or other algorithmic processes. Similarly, while certain aspects and implementations are discussed herein with reference to use of a ML model, language model, or LLM, those aspects and implementations may be performed by any other AI model, generative AI model, generative model, NN, multimodal model, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), LLaMA (Large Language Model Meta AI), and BigScience Large Open-science Open-access Multilingual Language Model (BLOOM).

A "**user operation**" (or "**User Input**") can be any operations performed by one or more users to user interface(s) and/or other user input devices associated with a system (e.g., the data extraction system). User operations can include, for example, select, drag, move, group, or the like, nodes or edges of one or more interactive graphical representations for updating an ontology based on unmatched classified triples represented by the nodes or the edges. User operations can also include, for example, selecting an unmatched triple displayed in a list and identify one or more issues associated with the unmatched triple. User operations (e.g., input a text data to the data extraction system) can also prompt a task to be performed, such as by an LLM, in whole or in part.

A "**prompt**" (or "**natural language prompt**" or "**model input**") can be, for example, a term, phrase, question, and/or statement written in a human language (e.g., English, Chinese, Spanish, and/or the like), and/or other text string, that may serve as a starting point for a language model and/or other language processing. A prompt may include only a user input or may be generated based on a user input, such as by a prompt generation module (e.g., of a document search system) that supplements a user input with instructions, examples, and/or information that may improve the effectiveness (e.g., accuracy and/or relevance) of an output from the language model. A prompt may be predefined within a state machine. A prompt may be provided to an LLM which the LLM can use to generate a response (or "model output").

An "**ontology**" can include stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types. An ontology may be used by an organization to model a view of, or provide a template for, what objects exist in the world, what their properties are, and how they are related to each other.

A "**data object**" (or "object" or "data object instance") can be a data container for information representing a specific thing in the world that has a number of definable properties. For example, a data object can represent an interaction (e.g., recording events occurred during the interaction) between a user and an agent system. A data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth. A data object may be of a data object type, where the data object is stored in a database that is associated with an ontology that defines the data object type.

A "**data object type**" (or "object type") can be a type of a data object (e.g., person, event, document, and/or the like). Data object types may be defined by an ontology and may be modified or updated to include additional object types. A data object definition (e.g., in an ontology) may include how the data object is related to other data objects, such as being a sub-data object type of another data object type (e.g., an agent may be a sub-data object type of a person data object type), and the properties the data object type may have.

A "**data store**" can be any computer-readable storage medium and/or device (or collection of data storage mediums and/or devices). Examples of data stores include, but are not limited to, optical disks (e.g., CD-ROM, DVD-ROM, and the like), magnetic disks (e.g., hard disks, floppy disks, and the like), memory circuits (e.g., solid state drives, random-access memory (RAM), and the like), and/or the like. Another example of a data store is a hosted storage environment that includes a collection of physical data storage devices that may be remotely accessible and may be rapidly provisioned as needed (commonly referred to as "cloud" storage). According to various implementations, any data storage, data stores, databases, and/or the like described in the present disclosure may, in various implementations, be replaced by appropriate alternative data storage, data stores, databases, and/or the like.

A **database** can be any data structure (and/or combinations of multiple data structures) for storing and/or organizing data, including, but not limited to, relational databases (e.g., Oracle databases, PostgreSQL databases, MySQL databases, and the like), non-relational databases (e.g., NoSQL databases, and the like), in-memory databases, spreadsheets, comma separated values (CSV) files, eXtensible markup language (XML) files, TeXT (TXT) files, flat files, spreadsheet files, and/or any other widely used or proprietary format for data storage. Databases are typically stored in one or more data stores. Accordingly, each database referred to herein (e.g., in the description herein and/or the figures of the present application) can be understood as being stored in one or more data stores. Additionally, although the present disclosure may show or describe data as being stored in combined or separate databases, in various implementations such data may be combined and/or separated in any appropriate way into one or more databases, one or more tables of one or more databases, and/or the like. According to various implementations, any database(s) described in the present disclosure may be replaced by appropriate data store(s). Further, data source(s) of the present disclosure may include one or more databases, one or more tables, one or more data sources, and/or the like, for example.

### Overview

An agent (e.g., an artificial intelligence (AI) powered agent) can be deployed by a computing system to solve various problems, such as sending requests to a LLM service in performance of a task and handling LLM outputs. Agents may have access to tools, prompts, and other information to complete a run and can determine how complete the run (e.g., what tools to implement, how to interact with an LLM, etc.). However, solving complex problems may be highly inefficient or not possible for existing agents. For example, providing the agent with all of the necessary information to complete the run (e.g., description of all of the available tools) may be difficult or not possible due to the volume of information. As another example, an error occurring during a run may propagate through subsequent interactions with the LLM during the run, which may result in hallucinations and/or may require inefficiently iterating through interactions repeatedly to avoid such errors until the run is successfully completed. These characteristics of agents may make them less efficient, accurate, or flexible in solving certain problems.

As discussed herein, agents may be configured to efficiently solve both simple and complex problems. The present disclosure describes example systems and methods (generally collectively referred to herein as "an agent system", "agent", or "system") that can advantageously overcome various of the technical challenges mentioned above, among other technical challenges. The present disclosure further includes various processes, functionality, and interactive graphical user interfaces related to the system. According to various implementations, the system (and related processes, functionality, and interactive graphical user interfaces), can advantageously employ state machines to solve complex problems. A state machine may comprise a plurality of states each comprising a discrete set of information (e.g., tools available at that state, potential next states, etc.). Advantageously, the agent system executes a state machine to control interactions with an LLM which may reduce hallucinations, reduce the amount of time required to solve a problem, reduces the information that needs to be provided to the LLM since the complex process is broken down in independent steps, and/or reduce the number of interactions with an LLM. Further, the system may provide user interface(s) that allow users to track or monitor problem solving processes went through by agents to evaluate the soundness of steps taken or decisions made by agents. The system may further allow users to configure agents and/or state machines based on various user objectives to enhance scalability and reusability of the system.

### Agent Configurations

Agents deployed in an agent system (or AI system) may be configurable based on various settings or parameters. Agents in the system may share one or more common building blocks (e.g., an agent logic that defines how agents operate and/or interact with each other, tools, and/or users) but may be configured to various configurations by the system and/or users. In some implementations, an agent can be configured or reconfigured to be associated with various ontologies, large language models (LLMs), tools, accessories, storages, or the like. For example, a first configuration of an agent may associate the agent with a first set of ontologies, LLMs, tools, accessories, and storages and a second configuration of the agent may associate the agent with a second set of ontologies, LLMs, tools, accessories, and storages. The system may flexibly (e.g., based on user demands) reconfigure an agent from one configuration to another configuration. Advantageously, reconfigurable agents enable the system to swap or switch agent configurations for achieving various objectives. For example, the system may feed the same input(s) to two agents that are configured the same except LLMs utilized by the two agents to evaluate or benchmark performances of the LLMs. As another example, when an agent is tasked to solve a problem related to a new subject matter, the system and/or users may reconfigure the agent to utilize an ontology that is created or updated based on the new subject matter.

In some implementations, configurations of an agent can be version controlled by the system. For example, the system may assign version numbers (e.g., a string of text) to corresponding configurations of agents and keep track of configurations of agents using version numbers. More specifically, a first configuration of an agent may be assigned or identified by a first version number and a second configuration of the agent may be assigned or identified by a second version number. Additionally and/or optionally, the system may assign identification numbers (IDs) to components (e.g., one or more ontologies, LLMs, tools, and storages) of configurations of agents. For example, a first LLM and a first ontology in a first configuration of a first agent may be assigned a first LLM ID and a first ontology ID, and a second LLM and a second ontology in a second configuration of a second agent may be assigned a second LLM ID and a second ontology ID. Advantageously, version controlled configurations and/or IDs assigned to components of configurations may allow the system robustly and effectively track operations of agents, adapt agents among various configurations, or contrast strengths and weakness of an agent when operating under disparate configurations. In various implementations, the system may utilize pointers to access or point to an ontology, LLM(s), tool(s), accessory, storage(s), or one or more configurations associated with the agent.

Additionally, the system may generate and maintain a log to record events, timelines, received inputs, or generated outputs while an agent processes tasks. The log may describe events that occurred while the agent processes tasks and corresponding timestamps, inputs received from users and/or the system, and/or results generated by the agent while processing tasks. In various implementations, the log may record number of errors committed by the agent while processing tasks. Advantageously, the log may allow the system or users to effectively monitor or evaluate performances of agents for taking appropriate measures (e.g., re-train an agent for processing a particular type of task in response to monitoring a high error number from the agent while processing the particular type of task).

### Agent Handoffs

Agents may be configured to coordinate with each other to process tasks collaboratively. In some implementations, agents may coordinate with other agents by handing off tasks (e.g., a partially completed task) to other agents that are suitable or specialized in performing a next step in the tasks For example, when an agent determines that a task which the agent is processing requires specialized capability, the agent may handoff some or all of the task to another agent that has been trained or tested to efficiently solve the task.

In various implementations, an agent may handoff some (e.g., sub-tasks) or all of a task to one or more child agents which may be specialized in processing specific types of tasks or sub-tasks. The parent-child agent relationship can be configurable. For example, an agent can be configured to have child agent(s) and the child agent(s) may be explicitly specified in a configuration of the agent, where a configuration of the child agent(s) may also explicitly specify the agent as a parent agent. As such, the parent-child agent relationship(s) can be bi-directional. An agent can be a parent of another agent, and can also be a child of still another agent. Advantageously, handing off tasks to child agents provides multiple improvements over utilizing a single and large agent to process tasks. For example, handing off sub-tasks to child agents that have been proven to process the sub-tasks efficiently enables the system to effectively process requests from users to return accurate and reliable results. Handing off tasks may further reduce the update or maintenance cost of agents of the system because updates on or migration of agents can be targeted and tailored toward subsets of agents of the system.

When an agent (or coordinator, as discussed further below) determines that handoff of a sub-task to a child agent should occur, the agent (and/or coordinator) may identify information to provide to the child agent to aid in performance of the sub-task. For example, an agent may select one or more accessories (e.g., pieces of information) that are useful for the child agent to process the sub-task, and share the one or more accessories with the child agent. The agent may determine whether an accessory can be shared with the child agent based on permission of users or the system. An accessory, once shared by the agent to the child agent, may provide useful information to the child agent in processing a task or a sub-task more efficiently without the need to discover, generate, or obtain the accessory by the child agent itself.

The system may further allow various types of handoffs depending on use cases or tasks submitted by users. For example, the system may allow blocking handoffs, where an agent may handoff a task to a child agent, pauses until receiving a result from the child agent, and then proceeds after receiving the result. As another example, the system may allow parallel handoffs, where an agent may handoff tasks in parallel to multiple child agents, and, without waiting for results from the child agents, continues to process other tasks or sub-tasks that the agent is processing without handing off. Advantageously, various handoffs schemes enable the system to more flexibly and efficiently utilize agents to process tasks based on characteristics of the tasks. In various implementations, the system may limit number of handoffs associated with task(s) or sub-task(s). For example, for some types of tasks, the system may limit the handoffs of the task that may occur at most twice (e.g., an agent can handoff the task to two child agents) or other numbers. Advantageously, limiting number of handoffs on some or all types of tasks may increase security of the system and reduce likelihood of extensive looping of tasks that could occur if a set of tasks are attempting to incrementally optimize an output.

### Agent Accessory

Accessories are information that may be useful or necessary for agents to process tasks. Accessories may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. An accessory may be permissioned and/or subject to various security constraints such that the accessory may be accessible to some agents but inaccessible to other agents. Accessories may be generated or created by agents during processing tasks, but may also be provided by users based on demands of users. For example, when an agent is tasked to perform statistical analysis on sales data of an user to provide recommendation on how to increase sales volume, the user may provide a spreadsheet or other data files that include sales data as an accessory for the agent to process the task. Alternatively and/or optionally, accessories may be generated, discovered, synthesized, or created by agents while processing certain tasks. For example, while processing a task that needs to take into account particular information, an agent searched through on-line databases to identify a document containing the particular information and saved the particular information along with a document ID of the document as an accessory. Additionally and/or optionally, accessories may be created by agents using tools while processing tasks. For example, an accessory may be a result generated by an agent while processing a task, where the result may be utilized by the agent or other agents for processing other tasks.

To use accessories for processing tasks, agents may store accessories in memory (e.g., agent storages). To access accessories, agents may utilize pointers that point to locations in the memory where desired accessories are stored. In various implementations, accessories may be stored as data objects that are defined in one or more ontologies. An accessory can be multi-modal (e.g., including both textual and video information). An accessory can also come in different forms and types. For example, an accessory may include strings, double integers, integers, images, data frames, sound files, or the like. An agent may share accessories with other agents if sharing is permitted under the permissioning of the system. For example, the agent may grant other agents access to an accessory that is stored in a storage associated with the agent and provide a pointer to the accessory to other agents. Advantageously, when utilized by an agent, accessories may enrich knowledge base of the agent or increase potency of the agent.

In various implementations, the system can track a lineage of an accessory to track a basis for a generated accessory and/or whether the accessory is further utilized to generate other information. For example, the system can record a lineage of an accessory, where the lineage shows what tool(s) are utilized to generate the accessory. The lineage of the accessory may include metadata that can enable users or the system to efficiently track from where the accessory comes into being and where the accessory is used, such as which agents or tasks use the accessory (which may be one or more versions of an accessory).

In various implementations, lineages of accessories may be presented to users through interactive graphical representations that include nodes (e.g., representing accessories) and/or edges (e.g., representing connections between accessories) of graphical user interfaces (GUIs). Advantageously, the lineage of an accessory enables the system to more efficiently verify or evaluate the usefulness of the accessory. Once an accessory is stored in an agent storage, the system may further evaluate correctness or accuracy of information contained in the accessory. For example, if an agent or the system determines that the accessory contains accurate information, the agent or the system may keep the accessory in an agent storage. But if the agent or the system determines that the accessory contains inaccurate information, the agent or the system may update the accessory and/or delete the accessory from the agent storage.

Additionally and/or optionally, the system may impose a time-to-live constraint on an accessory based on characteristics of the accessory. For example, an accessory that is solely useful for processing a specific task by a specific agent may have a shorter time-to-live, and may be deleted once the specific task has been processed. As another example, an accessory that may be useful for an agent to process various tasks or for other agents may have a longer time-to-live, and may persist after the agent completes tasks using the accessory. As still another example, an accessory that is provided by a user may persist throughout or beyond an individual run, where the individual run is a full interaction of the user with the system. Advantageously, imposing time-to-live constraints on accessories may allow the system to more efficiently utilize storage resources by freeing up storage capacity that otherwise would be occupied by accessories that are no longer useful to users or the system.

### Agent Coordinator

In various implementations, the system may utilize an agent coordinator to supervise handoffs of tasks or sub-tasks among agents to ensure handoffs are robustly performed and do not interfere with processing of other tasks or sub-tasks. For example, if an agent seeks to handoff a first task to a child agent which is processing a second task and the first task requires the child agent switches from a current configuration to a different configuration, the agent coordinator may determine the handoff may adversely impact performance of the child agent and intervene to redirect the handoff to another child agent that has immediate capacity (e.g., already configured to the different configuration) to process the first task. Additionally and/or optionally, the agent coordinator may manage handoffs among agents based on input(s) from user(s). For example, upon receiving an input from a user indicating that a task is to be terminated, the agent coordinator may instruct agents that are processing the task to pause and may block handoffs of sub-tasks of the task. Advantageously, more computing resources may be released to process tasks based on user needs.

In various implementations, an agent coordinator may facilitate communications among agents, and communications between agents and users or the system. In some examples, the agent coordinator may manage and monitor operations performed by agents. For example, the agent coordinator may pause an agent if the agent coordinator determines that the agent is committing more errors while processing a task. As another example, the agent coordinator may restart an agent in response to receiving input(s) from a user. As yet another example, the agent coordinator may prevent unexpected input from feeding into an agent if the agent coordinator determines that the unexpected input may mislead the agent to improperly process a task.

Additionally, the agent coordinator may allow bidirectional communications between agents and users or the system. In various implementations, an agent may request additional information from a user or the system after the agent starts processing a request from the user. For example, the agent may request more user inputs from the user, such as a prompt or an accessory, through the agent coordinator. As another example, the agent may request the user to perform one or more actions on the system or other systems external to the system, such as requesting the user to enter entries in a system applications and products (SAP) ordering system before the agent can further proceed with a current task. Advantageously, the bidirectional communications facilitated by the agent coordinator allows users to more efficiently work with agents to meet demands of users.

### Agent Storage

An agent storage may be utilized by an agent to store data and/or information (e.g., accessories, tools, messages, program code, data files, tables, or the like) for processing tasks. For each agent, the system may allocate an agent storage, where an agent may store data and/or information used by the agent to process tasks. For example, an agent may store accessories that are generated by the agent in an agent storage associated with the agent, and share pointers that pointed to the stored accessories to other agents such that other agents can access the stored accessories. As another example, the agent may generate or create new tools (e.g., a statistical analysis tool) for processing certain tasks to the agent storage. As yet another example, the agent may be tasked to write a program code (e.g., Python code). The agent may then utilize a tool to find an application programming interface (API) endpoint for generating the program code, and store the program code in the agent storage. In various implementations, an agent may have full access to an agent storage allocated to the agent but may have limited access to agent storages of other agents. Based on permissioning of the system, an agent or the system may grant another agent access to parts or all of the agent storage of the agent. For example, an agent may share accessories to a child agent to which the agent handoffs a task or a sub-task.

To efficiently utilize an agent storage, an agent may have one or more retention policies that allow the agent to remove outdated data and/or information from the agent storage. For example, the agent may have a message retention policy based on which the agent may determine some messages are outdated or no longer useful, and can be removed from the agent storage. The message retention policy or any other data retention policies of the agent may be configurable. For example, the agent may configure its message retention policy to one of keep_initial_and_last_n, remove_by_drop, remove_and_add_summary, and the like.

Additionally, an agent may designate some of data and/or information stored in an agent storage to appropriate retention durations based on various criterion. In various implementations, the agent may determine that information contained in an accessory is true for a limited amount of time and assign a shorter time-to-live on the accessory stored in the agent storage. For example, the agent may determine that information contained in the accessory no longer holds true after a currently processed task is completed. Once completing the task, the agent may remove the accessory from the agent storage to release spaces of the agent storage. Removing outdated accessories, messages, and/or other data stored in the agent storages enables agents to more efficiently utilized available and constrained storage resources to preserve capacity for storing useful data and/or information in agent storages.

### Example User Interface Features

The system may further allow users to interact with the system through one or more user interfaces (e.g., a graphical user interface ("GUI") or other types of user interfaces) to allow users to configure agents, interact with agents, and verify results generated by agents. In various implementations, users may configure an ontology, a LLM, tools, accessories, an agent storage, a state machine, or other aspects of an agent through operating on a user interface. For example, a user may configure a state machine the agent can utilize to process tasks. The user interface may further allow users to view and track various configurations of a state machine (e.g., through version control mechanisms). Advantageously, a user may preserve a specific configuration of an agent that is tested to be effective for solving a specific type of problems while experimenting new configurations based on minor or minimal adjustments to the specific configuration without losing the efficacy of the specific configuration. Additionally and/or optionally, the user may configure types of LLMs and/or machine learning (ML) models accessible to the agent through the user interface.

In various implementations, a user may evaluate or verify results generated by agents through manipulating a user interface provided by the system. In some examples, the user interface may present information related to an individual run. For example, the information related to the individual run may include the initial prompt and subsequent prompts received by the agent from the user, starting and end timestamps of the individual run, status (e.g., completed, succeeded, failed, or the like) of the individual run, timelines of occurrence of events while the agent executing the individual run, intermediate results generated by the agent, states of a state machine executed by the agent, requests for user input from the agent, child-agents to which the agent handoffs tasks, number of errors committed by the agent when utilizing some tools, or the like. Advantageously, the system may allow users to more efficiently evaluate or verify performances of agents through, for example, reviewing steps or actions taken by an agent to process a task. Additionally and/or optionally, the system may allow a user to create one or more accessories by operating on user interface(s) provided by the system, where the created accessories may be passed to agents by the system for processing tasks submitted by the user.

### Example Large Language Model Functionality

The system and/or agents of the system may employ one or more LLMs to provide various services. In various implementations, agents may receive user requests to process various types of tasks, such as automatically generating texts to summarize a set of documents, conducting analysis based on data contained in articles, tables, spreadsheets, or the like, scheduling distribution of materials based on supply chain constraints and requirements from demand sides, or the like. For example, agents may allow users to query internal or third-party data using a LLM (e.g., a QA (question and answer) LLM) that is trained to generate answers from user queries. In various implementations, the LLMs utilized by the system and/or the agents may be locally hosted, cloud managed, accessed via one or more Application Programming Interfaces ("APIs"), and/or any combination of the foregoing and/or the like. Data that may be processed by agents through using the LLMs may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

As noted above, the system may provide the flexibility of easily swapping between various language models employed by agents to provide various services through configuring agents. For example, the system may swap a LLM (e.g., switching between GPT-2 to GPT-3) for analyzing information to provide recommendations (e.g., to which distribution centers shipment orders should be placed) based on analyses. Such model swapping flexibility provided by the system may be beneficial in various aspects, such as experimentation and adaptation to different models based on specific use cases or requirements, providing versatility and scalability associated with services rendered by the system.

In other embodiments, the system and/or agents of the system can incorporate and/or communicate with one or more LLMs to perform various functions, such as executing similarity searches to search for data. The communication between the system and the one or more LLMs may include, for example, a context associated with an aspect or analysis being performed by the system, a user-generated prompt, an engineered prompt, prompt and response examples, example or actual data, and/or the like. For example, the system and/or agents may employ an LLM, via providing an input to, and receiving an output from, the LLM. The output from the LLM may be parsed and/or a format of the output may be updated to be usable for various aspects of the system.

### Example Features Related to Data Objects

The system may employ database(s) that uses ontology and data objects to store, represent and/or organize data utilized by the system. The system may capture and synchronize data or information associated with a run (e.g., a full interaction of a user with the system) into an ontology associated with a database. As such, data utilized by the system may be organized and linked to relevant context for providing a comprehensive knowledge base for evaluation, verification, and analysis.

In some embodiments, a body of data may be conceptually structured according to an object-centric data model represented by the ontology. The ontology may include stored information providing a data model for storage of data in the database. The ontology may be defined by one or more object types, which may each be associated with one or more property types. At the highest level of abstraction, data object may be a container for information representing things in the world. For example, data object can represent a document or other data source such as an e-mail message, a news report, or a written paper or article. Additionally, data object can represent an entity such as a person, a place, an organization, a market instrument, or other noun. Data object can further represent an event that happens at a point in time or for a duration. Each data object may be associated with a unique identifier that uniquely identifies the data object within the database of the system.

In various implementations, the system may utilize an "interaction data object" to store information and/or data associated with a run of a user in a database of the system for various purposes. The interaction data object may include data objects or may be linked to data object(s) that represent documents, data sources, timestamps of events (e.g., when one or more user queries of the user are received and/or responded), profiles of the user, or the like that are associated with a user interaction. For example, initial and subsequent prompts from the user and/or steps taken by agents utilized to fulfill objectives of the user can be stored by the system using the interaction data object and/or data objects associated with the interaction data object for later evaluation. The system may utilize the interaction data object and/or additional data objects to automatically generate evaluation reports for various purposes, such as evaluating the performances of agents. Advantageously, interaction data objects stored in the database of the system may enable information associated with the user interaction to be easily reviewable. The system may further utilize information stored using the interaction data object and/or other data objects to evaluate if agents are not processing tasks efficiently.

### Example System and Related Computing, Environment

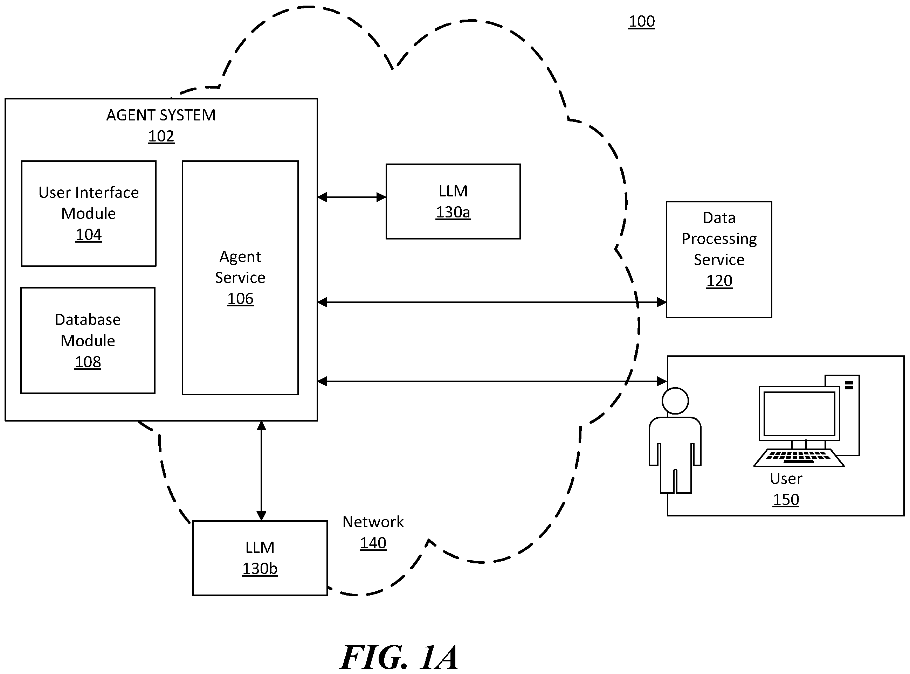

FIG. 1A illustrates an example computing environment 100 including an example agent system 102 in communication with various devices to respond to user inputs. The example computing environment 100 includes an agent system 102, a LLM 130a, a LLM 130b, a network 140, a data processing service 120, and a user 150. In the example of FIG. 1A, the agent system 102 comprises various modules, including a user interface module 104, a database module 108, and an agent service 106. In other embodiments, the agent system 102 may include fewer or additional components.

In the example of FIG. 1A, the various devices are in communication via a network 140, which may include any combination of networks, such as one or more personal area network, local area network, wide area network, over-the-air broadcast network (e.g., for radio or television), cable network, satellite network, cellular telephone network, or combination thereof. As a further example, the network 140 may be a publicly accessible network of linked networks, possibly operated by various distinct parties, such as the Internet. In some embodiments, the network 140 may be a private or semi-private network, such as a corporate or university intranet. The network 140 may include one or more wireless networks, such as a Global System for Mobile Communications (GSM) network, a Code Division Multiple Access (CDMA) network, a Long Term Evolution (LTE) network, or any other type of wireless network. The network 140 can use protocols and components for communicating via the Internet or any of the other aforementioned types of networks. For example, the protocols used by the network 140 may include Hypertext Transfer Protocol (HTTP), HTTP Secure (HTTPS), Message Queue Telemetry Transport (MQTT), Constrained Application Protocol (CoAP), and the like. In some embodiments, modules of the illustrated components, such as the user interface module 104, the database module 108, and the agent service 106, may communicate via an internal bus and/or via the network 140.

The user interface module 104 is configured to generate user interface data that may be rendered on a user 150, such as to receive an initial user input, as well as later user input that may be used to initiate further data processing. In some embodiments, the functionality discussed with reference to the user interface module 104, and/or any other user interface functionality discussed herein, may be performed by a device or service outside of the agent system 102 and/or the user interface module 104 may be outside the agent system 102. Example user interfaces are described in greater detail below.

The database module 108 may be any types of data stores and can store any data, data objects of data object types, or the like. The database module 108 is configured to store data/information that may be utilized by the agent system 102 and/or accessed or manipulated by the user 150, as described herein. Data that may be stored in the database module 108 may include any type of electronic data, such as text, files, documents, books, manuals, emails, images, audio, video, databases, metadata, positional data (e.g., geo-coordinates), sensor data, web pages, time series data, and/or any combination of the foregoing and/or the like. In some implementations, the database module 108 can store one or more state machines.

In the example of FIG. 1A, the user 150 (which generally refers to a computing device of any type that may be operated by a human user) may provide a user input to the agent system 102 indicating a natural language request for some data analysis to be performed or tasks and/or problems to be solved by the agent system 102. For example, the user input along with other supplemental information or instructions, if any, may be provided through the user interface module 104 to the agent service 106. In some embodiments, the user 150 may provide supplemental information (e.g., specifying some constraints on processing results to be generated by the agent service 106, selecting one or more object types to limit processing by the agent system 102 to only those selected object types, or the like) to increase speed and relevance of results provided by the agent service 106 and/or agent system 102, while in other embodiments the user 150 may not provide any information except an initial input.

As noted above, the agent system 102 (e.g., the agent service 106) may include and/or have access to one or more large language model (LLM) or other language model, and the LLM may be fine-tuned or trained on appropriate training data (e.g., annotated data showing correct or incorrect pairings of sample natural language queries and responses). After receiving a user input, the agent system 102 may generate and provide, through the agent service 106, one or more prompts to a LLM 130a, which may include one or more large language models trained to fulfill a modeling objective, such as task completion, text generation, summarization, or the like.

The LLM 130a and various modules of the agent system 102, such as the agent service 106, may also communicate with one or more data processing services 120 in the course of fulfilling a user input. The data processing services 120 may include any quantity of services (or "plug-ins") and any available type of service. For example, the data processing services 120 may include one or more search services (e.g., a table search service, an object search service, a text search service, or any other appropriate search service), indexing services, services for formatting text or visual graphics, services for generating, creating, embedding and/or managing interactive objects in a graphical user interface, services for caching data, services for writing to databases, an ontology traversing service (e.g., for traversing an ontology or performing search-arounds in the ontology to surface linked objects or other data items) or any other services. For example, the agent service 106 may request for data processing services 120 to perform a specific process. In some implementations, the data processing services 120 may be a part of the agent system 102 (e.g., as part of a data processing services module of the agent system 102).

In various implementations, the agent service 106 may receive user requests to process various types of tasks, such as automatically generating texts to summarize a set of documents, conducting analysis based on data contained in articles, tables, spreadsheets, or the like, scheduling distribution of materials based on supply chain constraints and requirements from demand sides, or the like. For example, the agent service 106 may allow users to query internal or third-party data using the LLM 130a (e.g., a QA (question and answer) LLM) that is trained to generate answers from user queries. In various implementations, the LLM 130a utilized by the agent service 106 may be locally hosted, cloud managed, accessed via one or more Application Programming Interfaces ("APIs"), and/or any combination of the foregoing and/or the like. Data that may be processed by the agent service 106 through using the LLM 130a may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

As shown, the agent system 102 (e.g., the agent service 106) may be capable of interfacing with multiple LLMs. This allows for experimentation and adaptation to different models based on specific use cases or requirements, providing versatility and scalability to the system. In some implementations, the agent system 102 may interface with a second LLM 130b in order to, for example, solve a problem for the user 150, generate an input to a data processing service 120, or to generate some or all of a natural language prompt (e.g., generate a prompt for the first LLM 130a).

In the example of FIG. 1A, the agent service 106 may include a plurality of agents that may be utilized by the agent system 102 to solve various problems or process various tasks received from the user 150. As noted above, agents in the agent service 106 may coordinate with each other to solve problems or process tasks, thereby increasing the efficiency and accuracy of the agent system 102 in processing user inputs from the user 150. Agents employed by the agent service 106 may be configurable based on various settings or parameters. Additionally, configurations of agents can be version controlled by the agent service 106. The agent service 106 may generate and maintain a log to record events, timelines, received inputs, or generated outputs while agents process tasks or solve problems received from the user 150. In various implementations, agents employed by the agent service 106 may coordinate with other agents by handing off tasks to agents (e.g., child-agents) which are suitable or specialized in performing the tasks. If an agent determines to handoff a sub-task to a child agent, the agent may choose to share knowledge with the child agent. For example, the agent may share an accessory with the child agent, where the accessory may be useful in processing the sub-task. The agent service 106 may provide storage (e.g., agent storage) for agents to store accessories and/or other information useful for processing tasks or problems. The agent service 106 may further utilize an agent coordinator to supervise handoffs of tasks or sub-tasks among agents to ensure handoffs are robustly performed and do not interfere with processing of other tasks or sub-tasks. In various implementations, the agent coordinator of the agent service 106 may facilitate communications among agents, and communications between agents and users or the system.

Advantageously, the agent service 106 enables agents to coordinate (e.g., handoff a task from one agent to another) with each other to effectively solve problems received from the user 150 in both time and resource efficient manners. Additionally, the agent service 106 allows agents to share information useful for processing tasks or solving problems effectively and reliably while respecting security and/or permissioning defined by the agent system 102 and/or the user 150. Further, through the assistance of the user interface module 104, the agent service 106 may allow the user 150 to track or monitor problem solving processes went through by agents employed by the agent service 106 to evaluate the soundness of steps taken or decisions made by agents. The agent service 106 may further allow the user 150 to configure agents based on various user objectives to enhance scalability and reusability of the agent system 102.

### Example System and Related Modules

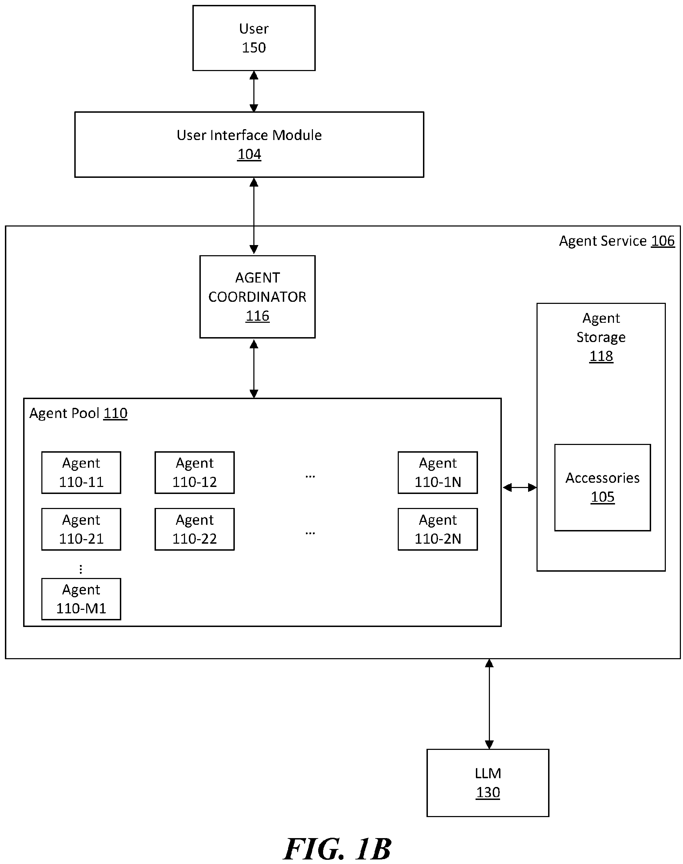

FIG. 1B depicts example connections between various modules associated with the agent system 102 of FIG. 1A, including the user interface module 104, the agent service 106 that includes one or more agent coordinator 116, one or more agent storage 118, and a collaborative agent network 110, and the LLM 130. In other embodiments, the agent system 102 and/or the agent service 106 may include fewer or additional connections. The indicated connections and/or data flows of FIG. 1B are exemplary of only certain processes performed by the agent system 102 and is not meant to include all possible blocks and participants.

As described above, the user interface module 104 is configured to generate user interface data that may be rendered on the user 150 (which generally refers to a computing device of any type and/or a human user of the device), such as to receive an initial user input, as well as later user input that may be used to initiate further data processing. In some embodiments, the functionality discussed with reference to the user interface module 104, and/or any other user interface functionality discussed herein, may be performed by a device or service outside of the agent system 102 and/or the user interface module 104 may be outside the agent system 102. A user 150 may provide a user input to the user interface module 104 indicating a natural language request for some data analysis to be performed and/or tasks or problems to be solved by the agent system 102.

The user input along with other supplemental information or instructions, if any, may be provided through the user interface module 104 to the agent service 106. In some embodiments, the user 150 may provide supplemental information (e.g., specifying some constraints on processing results to be generated by the agent service 106, selecting one or more object types to limit processing by the agent system 102 to only those selected object types, or the like) to increase speed and relevance of results provided by the agent service 106 and/or agent system 102, while in other embodiments the user 150 may not provide any information except an initial input.

In the example of FIG. 1B, the agent service 106 includes the agent coordinator 116, the agent storage 118 and the collaborative agent network 110. The collaborative agent network 110 includes the agent 110-11, the agent 110-21 through the agent 110-M1, where the agent 110-21 through the agent 110-M1 (M being any positive integer) are child-agents of the agent 110-11; the agent 110-12 and the agent 110-22, where the agent 110-22 is the child-agent of the agent 110-12; and the agent 110-1N (N being any positive integer) and the agent 110-2N, where the agent 110-2N is the child-agent of the agent 110-1N. Each of the agents 110-11, 110-21, 110-M1, 110-12, 110-22, 110-1N, or 110-2N may be configurable based on various settings. For example, the agent 110-11 can be configured or reconfigured to be associated with various ontologies, large language models (LLMs), tools, accessories, storages, or the like. The agent service 106 may flexibly (e.g., based on user demands) reconfigure each of the agents 110-11, 110-21, 110-M1, 110-12, 110-22, 110-1N, or 110-2N from one configuration to another configuration. Advantageously, reconfigurable agents enable the agent service 106 to swap or switch agent configurations for achieving various objectives. For example, the agent service 106 may feed the same input(s) to the agents 110-11 and 110-21 that are configured the same except LLMs utilized by the agents 110-11 and 110-21 to evaluate or benchmark performances of the LLMs. As another example, when the agent 110-1N is tasked to solve a problem related to a new subject matter, the agent service 106 and/or users may reconfigure the agent 110-1N to utilize an ontology that is created or updated based on the new subject matter.

In various implementations, the agents 110-11, 110-21, 110-M1, 110-12, 110-22, 110-1N, or 110-2N in the collaborative agent network 110 may coordinate with each other to process tasks collaboratively. For example, the agent 110-12 may coordinate with the agent 110-22 by handing off tasks to the agent 110-22, where the agent 110-22 is suitable or specialized in performing the tasks. More specifically, when the agent 110-12 determines that a task which the agent 110-22 is processing requires specialized capability, the agent 110-12 may handoff some or all of the task to the agent 110-22 that has been trained or tested to efficiently solve the task. In various implementations, agents 110-11, 110-12, 110-1N may handoff some (e.g., sub-tasks) or all of a task to one or more child agents which may be specialized in processing specific types of tasks or sub-tasks. Additionally, the parent-child agent relationship can be configurable by the agent service 106. For example, the agent 110-11 can be configured to have the agent 110-21 as a child agent, where the child agent (i.e., the agent 110-21) may be explicitly specified in a configuration of the agent 110-11. A configuration of the agent 110-21 may also explicitly specify the agent 110-11 as a parent agent. As such, the parent-child agent relationship(s) can be bi-directional. Advantageously, handing off tasks from agents 110-11, 110-12 and 110-1N to corresponding child agents 110-21, 110-M1, 110-22, 110-2N provide multiple improvements over utilizing a single and large agent to process tasks. For example, handing off sub-tasks to child agents that have been proven to process the sub-tasks efficiently enables the agent service 106 to effectively process requests from the user 150 to return accurate and reliable results. Handing off tasks may further reduce the update or maintenance cost of agents employed by the agent service 106 because updates on or migration of agents can be targeted and tailored toward subsets of agents of the system.

The agent service 106 may further utilize the agent storage 118 to store information useful for the collaborative agent network 110 to process tasks or solve problems received from the user 150. In various implementations, the agent storage 118 may store accessories 105 that may be useful or necessary for agents to process tasks. Accessories 105 may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. Accessories 105 may be permissioned and/or subject to various security constraints such that the accessory may be accessible to some agents but inaccessible to other agents. Accessories 105 may be generated or created by agents in the collaborative agent network 110 during processing tasks, but may also be provided by users based on demands of users. For example, when the agent 110-11 is tasked to perform statistical analysis on sales data of the user 150 to provide recommendation on how to increase sales volume, the user 150 may provide a spreadsheet or other data files that include sales data as a part of the accessories 105 for the agent 110-11 to process the task. Alternatively and/or optionally, accessories 105 may be generated, discovered, synthesized, or created by agents while processing certain tasks. For example, while processing a task that needs to take into account particular information, the agent 110-12 searched through on-line databases to identify a document containing the particular information and saved the particular information along with a document ID of the document in the agent storage 118 as a part of the accessories 105. Additionally and/or optionally, accessories 105 may be created by agents in the collaborative agent network 110 using tools while processing tasks. For example, a part of the accessories 105 may be a result generated by the agent 110-1N while processing a task, where the result may be utilized by the agent 110-1N or 110-2N for processing other tasks.

In various implementations, the agent storage 118 may impose a time-to-live constraint on the accessories 105 based on characteristics of the accessories 105. For example, an accessory that is solely useful for processing a specific task by a specific agent (e.g., the agent 110-11) may have a shorter time-to-live, and may be deleted once the specific task has been processed. As another example, an accessory that may be useful for the agent 110-12 to process various tasks and also useful for another agent 110-IN may have a longer time-to-live, and may persist after the agent 110-12 completes tasks using the accessory. Advantageously, imposing time-to-live constraints on accessories 105 may allow the agent storage 118 to more efficiently utilize storage resources by freeing up storage capacity that otherwise would be occupied by accessories 105 that are no longer useful to the user 150 or the agent system 102.

In addition to storing accessories 105, agents in the collaborative agent network 110 may also store tools for processing certain tasks or generated results to the agent storage 118. For example, the agent 110-12 may be tasked to write a program code (e.g., Python code). The agent 110-12 may then utilize a tool stored in the agent storage 118 to find an application programming interface (API) endpoint for generating the program code, and store the program code in the agent storage 118. In various implementations, the agent storage 118 may be partitioned and allocated to agents in the collaborative agent network 110. For example, the agent 110-21 may have full access to a portion of the agent storage 118 allocated to the agent 110-21 but may have limited or no access to portions of the agent storage 118 allocated to other agents in the collaborative agent network 110. Based on permissioning of the agent system 102, an agent or the agent system 102 may grant another agent access to parts or all of the agent storage 118 allocated to the agent. For example, the agent 110-11 may share accessories 105 to a child agent (e.g., the agent 110-21) to which the agent 110-11 handoffs a task or a sub-task.

In various implementations, the agent service 106 may utilize the agent coordinator 116 to supervise handoffs of tasks or sub-tasks among agents in the collaborative agent network 110 to ensure handoffs are robustly performed and do not interfere with processing of other tasks or sub-tasks. For example, if the agent 110-11 seeks to handoff a first task to the agent 110-21 that is processing a second task and the first task requires the agent 110-21 switches from a current configuration to a different configuration, the agent coordinator 116 may determine that the handoff may adversely impact performance of the agent 110-21 and intervene to redirect the handoff to the agent 110-M1 that has immediate capacity (e.g., already configured to the different configuration) to process the first task. Additionally and/or optionally, the agent coordinator 116 may mange handoffs among agents of the collaborative agent network 110 based on input(s) from the user 150. For example, upon receiving an input from the user 150 indicating that a task is to be terminated, the agent coordinator 116 may instruct agents (e.g., the agent 110-12 and the agent 110-22) that are processing the task to pause and may block handoffs of sub-tasks of the task. As such, more computing resources may be released to process tasks based on needs of the user 150.

In various implementations, the agent coordinator 116 may facilitate communications among agents in the collaborative agent network 110, and communications between agents in the collaborative agent network 110 and the user 150 or the agent system 102. In some examples, the agent coordinator 116 may manage and monitor operations performed by agents in the collaborative agent network 110. For example, the agent coordinator 116 may pause an agent (e.g., the agent 110-22) if the agent coordinator 116 determines that the agent is committing more errors while processing a task. As another example, the agent coordinator 116 may restart the agent 110-1N in response to receiving input(s) from the user 150. As yet another example, the agent coordinator 116 may prevent unexpected input from feeding into the agent 110-M1 if the agent coordinator determines that the unexpected input may mislead the agent 110-M1 to improperly process a task.

Additionally, the agent coordinator 116 may allow bidirectional communications between agents in the collaborative agent network 110 and the user 150 or the agent system 102. In various implementations, an agent (e.g., the agent 110-1N) in the collaborative agent network 110 may request additional information from the user 150 or the agent system 102 after the agent starts processing a request from the user 150. For example, the agent 110-1N may request more user inputs from the user 150, such as a prompt or an accessory, through the agent coordinator 116. As another example, the agent 110-11 may request the user 150 to perform one or more actions on the agent system 102 or other systems external to the agent system 102, such as requesting the user 150 to enter entries in a system applications and products (SAP) ordering system before the agent 110-11 can further proceed with a current task. Advantageously, the bidirectional communications facilitated by the agent coordinator 116 allows the user 150 to more efficiently work with agents in the collaborative agent network 110 to meet demands of the user 150.

In various implementations, the user interface module 104 allows the user 150 to configure agents, interact with agents, and verify results generated by agents in the collaborative agent network 110. The user 150 may configure an ontology, a LLM, tools, accessories 105, the agent storage 118, or other aspects of an agent through interacting with the user interface module 104. For examples, the user 150 may configure which tools (e.g., a calculator or other tools) the agent 110-11 can utilize to process tasks. The user 150 may also configure types of child-agents to which the agent 110-11 may handoff tasks or sub-tasks, and maximum number of handoffs that can be utilized by the agent 110-11. Additionally and/or optionally, the user interface may further allow the user 150 to view and track various configurations (e.g., through version control mechanisms noted above) that are available to configure an agent or child-agents of the agent. Advantageously, the user 150 may preserve a specific configuration of an agent that is tested to be effective for solving a specific type of problems while experimenting new configurations based on minor or minimal adjustments to the specific configuration without losing the efficacy of the specific configuration.

### Example Database and Data Models

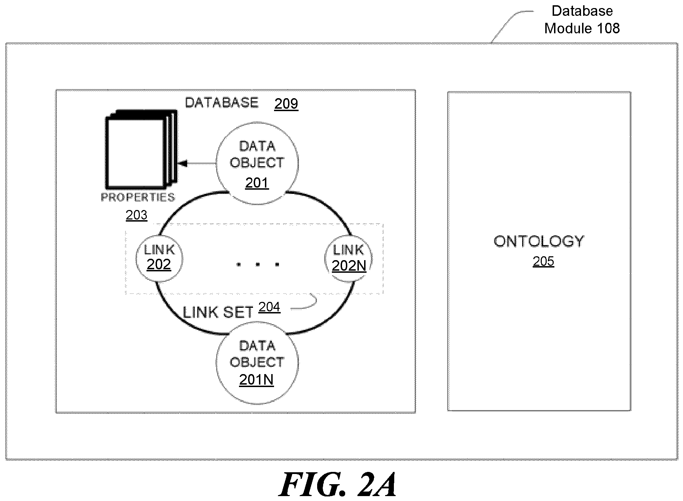

FIG. 2A illustrates an object-centric conceptual data model in the database module 108 of the agent system 102 according to various embodiments of the present disclosure. An ontology 205, as noted above, may include stored information providing a data model for storage of data in the database 209. The ontology 205 may be defined by one or more object types, which may each be associated with one or more property types. At the highest level of abstraction, data object 201 is a container for information representing things in the world. For example, interaction data object 210 that will be described with greater detail below can store information and/or data associated with a run of the user 150 in the database 209 of the agent system 102 for various purposes. Data object 201 can also represent a document or other unstructured data source such as an e-mail message, a news report, or a written paper or article. Data object 201 can also represent a query submitted by the user 150 or an answer provided by the agent system 102 to the user 150 in response to the query. Data object 201 can also represent an entity such as a person, a place, an organization, a market instrument, or other noun. Data object 201 can also represent an event that happens at a point in time or for a duration. Each data object 201 is associated with a unique identifier that uniquely identifies the data object within the database module 108.

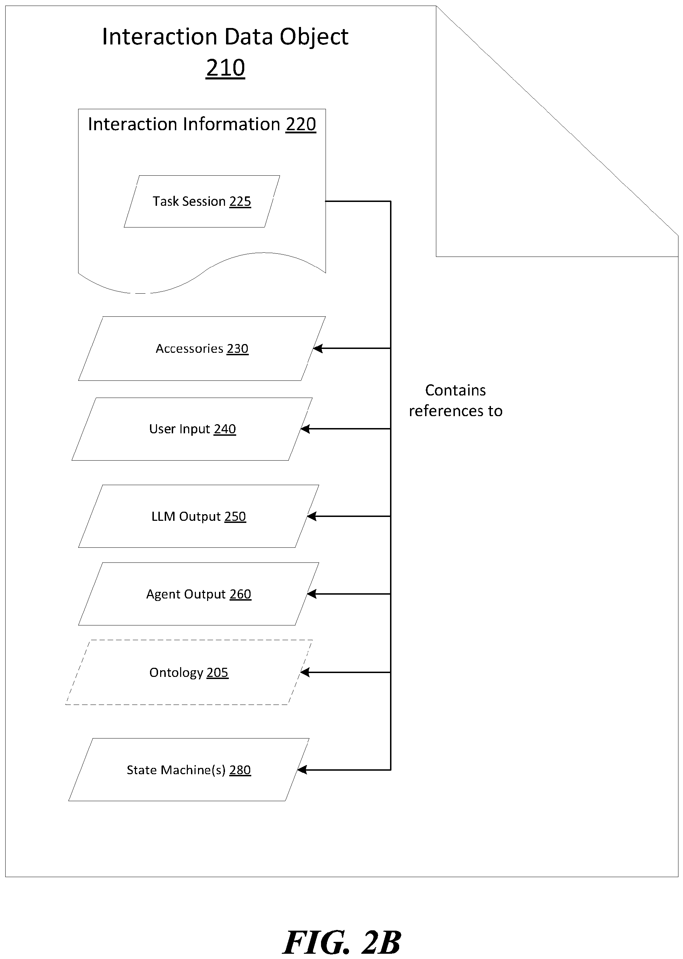

FIG. 2B is a block diagram illustrating an example interaction data object 210 in accordance with various implementations of the present disclosure. As indicated above, the interaction data object 210 may be stored in the database 209 of the database module 108. In various implementations, the agent system 102 may utilize the interaction data object 210 to store information and/or data associated with a run of a user in a database of the system for various purposes. The interaction data object 210 may include data objects or may be linked to data object(s) that represent documents, data sources, timestamps of events (e.g., when one or more user queries of the user are received and/or responded), profiles of the user, or the like that are associated with a user interaction with the user 150. For example, initial and subsequent prompts from the user 150 and/or steps taken by agents in the collaborative agent network 110 utilized to fulfill objectives of the user 150 can be stored by the agent system 102 using the interaction data object 210and/or data objects associated with the interaction data object 210 for later evaluation. The agent system 102 may utilize the interaction data object and/or additional data objects to automatically generate evaluation reports for various purposes, such as evaluating the performances of agents in the collaborative agent network 110. Advantageously, interaction data objects 210 stored in the database 209 of the agent system 102 may enable information associated with the user interaction to be easily reviewable. The agent system 102 may further utilize information stored using the interaction data object 210 and/or other data objects to evaluate if agents in the collaborative agent network 110 are not processing tasks efficiently.

The interaction information 220 may include references to a portion of accessories 105, user input 240, LLM output 250, context 260, ontology 205, and/or state machine(s) 280. For example, interaction information 220 may: (1) identify accessories 105 that are utilized by agents in the collaborative agent network 110 while processing tasks in a run of the user 150; (2) identify user input 240 that may be submitted by the user 150 in the run of the user 150; (3) identify LLM output 250 that may be generated by the LLM 130 in response to receiving a prompt from the collaborative agent network 110; (4) identify ontology 205 that the LLM 130 may traverse in fulfilling a user input 240 from the user 150; and/or (5) identify a state machine utilized by agents while processing tasks in a run of the user 150.

### Example System Implementations

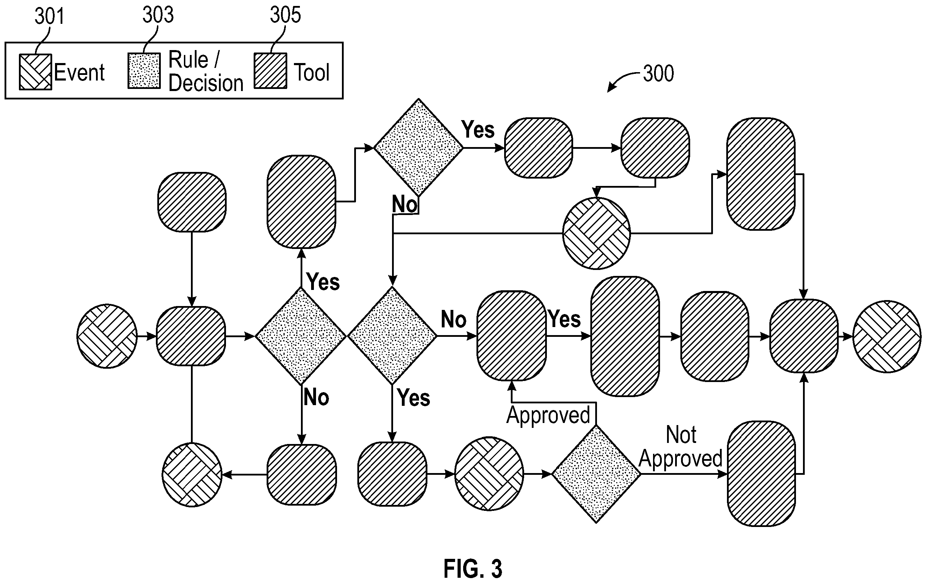

FIG. 3 is a block diagram illustrating an example state machine 300 which may be executed by an agent when performing operations or interacting with an LLM. An agent can execute a state machine to control interactions with an LLM which can increase an efficiency of the agent in performing the operations and/or may increase an accuracy of results. For example, a state machine may provide an agent with structured logic and available operations to guide the agent in making decisions about what operations to perform, which may prevent the agent from performing a series of incorrect or useless operations. Moreover, limiting the number of options available to an agent when performing operations may further increase the agent's efficiency and/or accuracy when performing operations. For example, a state machine can provide an agent with a focused set of available operations to perform, tools to use, or decisions to make which may prevent the agent from acting upon LLM hallucinations or attempting to perform useless actions.

Generally, a state machine may comprise a finite number of defined states. Each state may comprise logic, such as rules for performing decisions, a set of tools available to be used at that state, a set of operations available to be performed at that state, and a set of available next states. In this example, state machine 300 includes three classes of states including event states 30, decision states 303, and tool states 305. Event states 301 may comprise states wherein one or more events occur, such as agent operations, user operations, or other actions taken by an agent system or data processing service. Decision states 303 may comprise states wherein an agent makes one or more decisions such as what operation to perform to perform, what tool to use, what data to access, or what subsequent state to execute. Decision states 303 may comprise a set of logic or rules by which an agent makes a decision. Tool states 305 may comprise states wherein an agent implements one or more tools such as by causing a data processing service to execute a tool. A state machine may be designed to prevent an agent from executing more than one state at a time. An agent may not execute each of the states of a state machine during a run.

In some implementations, user may create a state machine as will be described in greater detail herein. For example, a user may define one or more states of a state machine or may update a state machine. In some implementations, an agent system may automatically generate a state machine and/or update existing state machines. For example, an agent system may promote agent operations to a state machine as will be described in greater detail herein. State machines, such as example state machine 300, can be stored in a database accessible by an agent or agent service, such as database module 108 shown and/or described herein. In some implementations, a state machine may comprise a set of program instructions executable by hardware processors to cause a computing system, such as an agent system, to perform one or more operations.

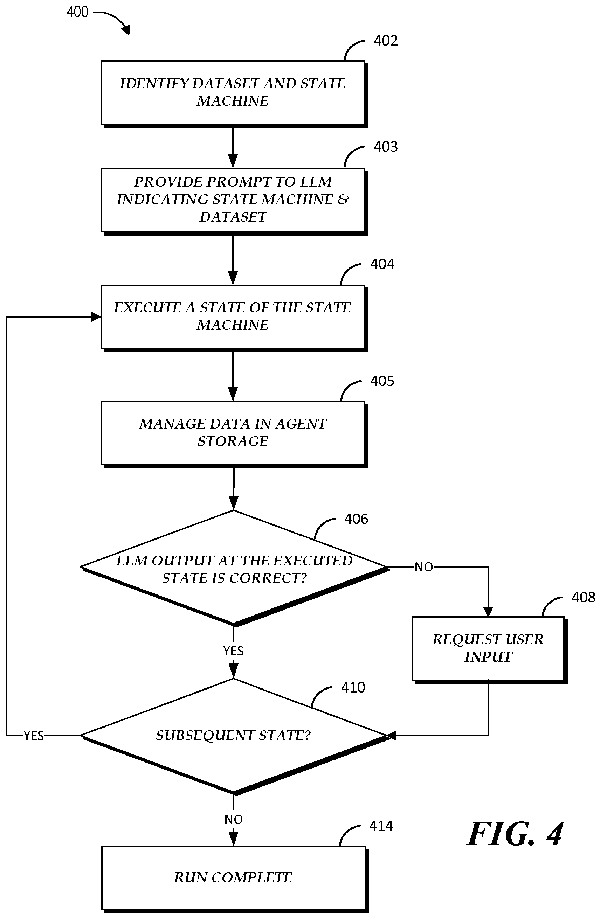

FIG. 4 is a flowchart illustrating an example process 400 for implementing a state-backed agent. This process, in full or parts, can be executed by one or more hardware processors, whether they're associated with a singular or multiple computing devices, such as agent system 102, and even devices in remote or wireless communication. The implementation may vary. For example, process 400 can involve modifications like omitting blocks, adding blocks, and/or rearranging the order of execution of the blocks. Process 400 serves as an example and isn't intended to limit the scope of present disclosure.

At block 402 the agent system can identify a dataset that will be the subject of a run. For example, an agent may identify a dataset or data object having a predetermined structure and generate new data objects that are consistent with the structure of the dataset. The new data objects may be based on source data input by a user or retrieved from a separate data source that is not structured in accordance with the predetermined structure. Creating the new data objects can include an agent performing one or more operations during a run such as applying one or more rules during one or more checkpoints. For example, the one or more rules may include determining that no existing data object corresponding to the new data object exists in the data set, determining that properties of the new object as indicated by the source data comply with predetermined rules, or determining that relationships between the new object and the existing data structures comply with pre-existing rules. For example, the new data object may represent machinery or a sensor in a representation of a technical system. The source data may include a description of the new data object, such as a natural language description of the object, a serial number, or an identifying code. The source data may further comprise an indication of the relationship between the new object and existing objects. For example, the source data may include an indication that a sensor retrieves measurements of a first type from a first entity represented in the dataset by a first object and provides the measurements of the first type to a second entity represented in the dataset by a second object. The agent may determine, for example, that an object corresponding to the new object does not already exist in the dataset by determining that no object having a serial number indicated in the source data exists in the dataset. As additional examples, an agent may identify a dataset or data object representing a person or entity and the agent will perform a run to onboard the person or entity as a customer within an existing system. Onboarding a person or entity as a customer within a system can include an agent performing one or more operations during a run such as approving the person or entity with one or more validation checkpoints, performing an industry check, performing a background check, and checking whether the person or entity already exists as a customer within the system. Another example implementation includes identify a dataset representing a person or entity and generating a loan for the person or entity by performing a run with an agent including verifying the person's collateral, approving the person's credit, or sending the request to a credit agency. The agent may identify the dataset based on a user input. For example, a user may provide a dataset to the agent and/or indicate a dataset to be retrieved from storage. In some implementations, the agent system may automatically identify a dataset based on one or more criteria.

At block 402 the agent system can identify a state machine to execute during a run. The agent may identify the state machine based on a user input. For example, a user may provide a state machine to the agent and/or indicate a state machine to be retrieved from storage. In some implementations, the agent system may automatically identify a state machine based on one or more criteria. The agent system can access the state machine from storage associated with the agent system, such as database module 108.

At block 403 the agent can provide a prompt to the LLM indicating the state machine and/or the dataset. For example, the state machine can be provided as context to the LLM. Providing the state machine to the LLM can include providing an entire state machine to the LLM, providing portions of a state machine, and/or providing metadata to the state machine useable to access the state machine (e.g., from storage). The agent can also indicate to the LLM (e.g., via the prompt) the initial dataset to retrieve, which can include indicating, an identifier of the dataset, a type of the dataset, and/or a location of the dataset in storage, by which the LLM can generate a tool call to retrieve the dataset from storage.

At block 404 the agent system (or agent of the system) can execute a state of the state machine. The agent may begin a run by executing an initial state of the state machine. In some implementations, executing an initial state may include performing operation of block 403, such as providing an initial prompt (or "initial state prompt") to the LLM. Generally, executing a state of the state machine, whether an initial state or subsequent states, can include providing a prompt to an LLM, receiving an output from an LLM, and/or implementing a tool such as pursuant to an LLM output. During execution of an initial state, the agent may retrieve the identified dataset pursuant to a tool call generated by the LLM (or "LLM tool call"). The agent system can access the dataset or data object from storage associated with the agent system, such as database module 108.

At block 405 the agent can manage data in the agent storage. Managing data can include storing data such as LLM outputs, prompts, tools implemented by the agent, data from a data processing service, and/or user inputs. The agent can store the data as an accessory. The agent can subsequently access the agent storage to facilitate completing a run, such as to determine whether an LLM output is complete as described at block 406. As another example, the agent may access data in the agent storage to generate a subsequent prompt for an LLM and/or to perform one or more operations of a subsequent state. In some implementations, the agent storage may be partitioned by run such that a discrete portion of the storage corresponds to a unique run. Managing data in the agent storage can include deleting data from the agent storage such as based on a retention policy governed by a time-to-live measured by a number of LLM interactions and/or executed states. For example, the agent may delete data from the agent storage that is associated with a previously executed state if a number of intervening executed states exceeds a threshold (e.g., one intervening state, two intervening states, etc.). As another example, the agent may delete data from the agent storage that is associated with a previous LLM interaction if a number of intervening LLM interactions exceeds a threshold (e.g., one intervening interaction, two intervening interactions, etc.). Advantageously, reducing the amount of data stored in the agent storage not only reduces memory storage requirements, but also improves accuracy and efficiency by focusing an agent on the most relevant data and preventing the agent from inefficiently focusing on irrelevant data. In some implementations, aspects of block 405 may comprise a state of state machine. For example, block 405 may be executed as a unique state in a state machine.

At decision block 406 the agent (e.g., by an LLM) can determine whether an LLM output at the executed state is correct or is expected. An LLM output may be correct if the output appropriately corresponds to a prompt or is formatted correctly, for example. An LLM output may be incorrect if the output attempts to cause the agent to access or implement a non-existent or inappropriate database, data processing service, or tool. In some implementations, determining whether the output is correct includes determining whether the output is complete, such as if the output comprises an entire set of data that was requested or that is necessary to complete the run. The agent can determine whether the LLM output is correct based on at least comparing the LLM output with the agent storage, which may include information associated with the run, such as a history of LLM prompts and LLM outputs. For example, the agent may compare the LLM output with a prompt (or series of prompts) provided to the LLM to determine whether the output corresponds to the prompt, such as if the output includes data requested in the prompt, includes all the data requested in the prompt, and/or is formatted according to the prompt. In some implementations, as discussed herein, the agent storage may comprise less than an entire history of data associated with a run, such as only the most recent LLM prompt and LLM output, which may advantageously, increase the likelihood of accurately determining the correctness of an LLM output by reducing the possibility for error by reducing the amount of data. Determining whether an LLM output is correct may advantageously reduce the processing requirements to complete a run such as by preventing an agent from performing one or more erroneous operations (e.g., pursuant to an incorrect LLM output). Although described with reference to an agent, the determination at block 406, may, in some implementations, be performed by an LLM. For example, the agent may provide data to the LLM for the LLM to determine whether an output is correct. In some implementations, aspects of block 406 may comprise a state of state machine. For example, block 406 may be executed as a unique state in a state machine. In some implementations, an incorrect or unexpected or incomplete LLM output may correspond to a failed state.

If the agent determines that the LLM output is correct, the agent may proceed to decision block 410. If the agent determines that the LLM output is not correct, the agent may proceed to block 408.

At block 408 the agent can optionally request user input. For example, if the agent determines that an LLM output is incomplete at block 406, the agent can request a user to input the missing data. Requesting user input can include generating a notification or message to a user, such as an email or text message, and providing a hyperlink whereby the user can access the data and/or provide the data to the agent. In some implementations, (e.g., depending on the logic of a state machine), the agent may wait at block 408 before performing other operations such as proceeding to a subsequent state. In some implementations, the agent may continue to subsequent states to complete the run regardless of whether a user has provided the input requested at block 408. Advantageously, executing the state machine with user input may ensure that the agent is performing the run with optimal data to ensure optimal accuracy of the run results. In some implementations, aspects of block 408 may comprise a state of state machine. For example, block 408 may be executed as a unique state in a state machine.

At decision block 410 the agent (e.g., by an LLM) can determine whether a subsequent state exists in the state machine and/or which of a plurality of states to execute next. For example, a state that is currently being executed by the agent may define one or more states as available options as subsequent states to be executed. The agent (e.g., by the LLM accessing the state machine) can identify one of the available states to execute next, based on at least decision logic defined in the currently executed state machine. In some implementations, an LLM can determine a subsequent state to execute based on decision logic contained in the prompt provided to the LLM by the agent. Pursuant to requesting user input, the agent may determine to execute the same state again (e.g., if the user has provided the requested input). As another example, pursuant to requesting user input, the agent may determine to proceed to a failed state, where the agent waits for user input or where the agent terminates the run entirely. As another example, pursuant to determining that an LLM output is correct, the agent may determine a subsequent state based on state logic corresponding to when the output is correct. In some implementations, aspects of block 410 may comprise a state of state machine. For example, block 410 may be executed as a unique state in a state machine.

The agent can proceed to block 404 in response to determining a subsequent state to execute. The agent can proceed to block 414 in response to determining there are no subsequent states to execute and/or that the run is complete.

At block 414 the agent can complete the run which can include terminating execution of a state machine. Completing a run can include providing one or more run results to a user and/or saving results to storage.

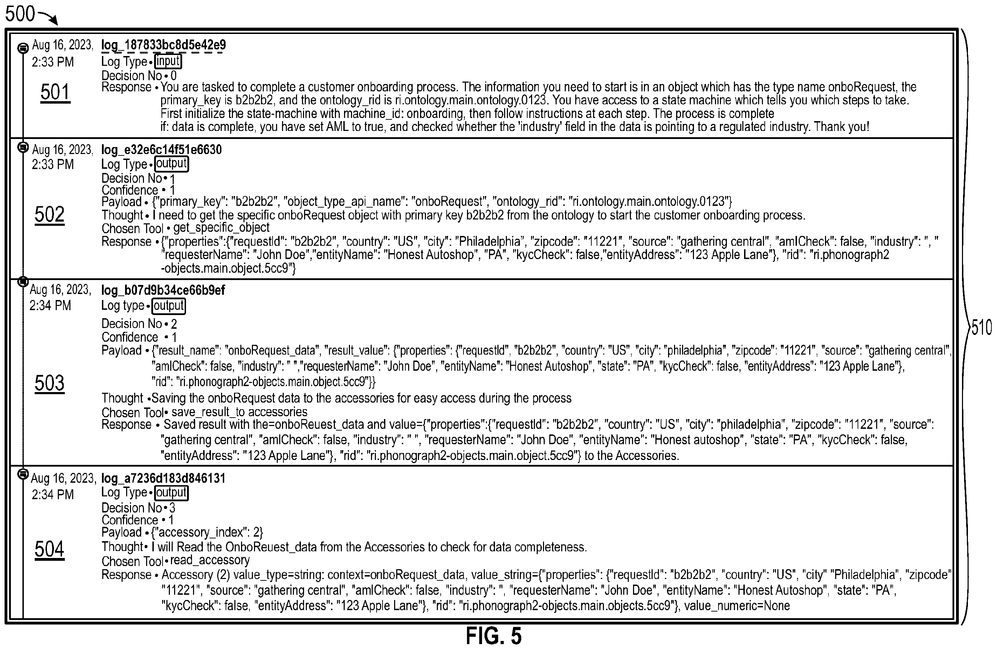

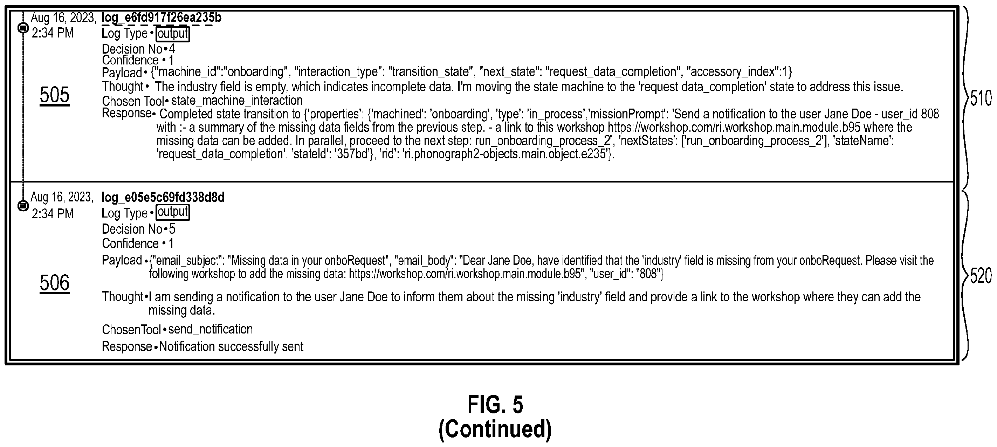

FIG. 5 illustrates an example user interface 500 for monitoring the operations of a state-machine backed LLM agent during a run. An agent system, such user interface module 104 of agent system 102 shown and/or described herein, can generate user interface data for rendering user interface 500. User interface 500 displays a plurality of interactions 501-506 between an agent and an LLM. Interactions 501-506 may correspond to states of a state machine that are executed during the run. In this example, interactions 501-505 correspond to an initial state 510 and interaction 506 corresponds to a request data state 520. The agent system can generate the user interface 500 in real-time, for example as the run is occurring. For example, the agent system can generate user interface data and render the portion of the user interface 500 corresponding to interaction 501 immediately upon completion of interaction 501 which rendering may occur before completion of interaction 502 and/or before rendering the portion of the user interface 500 corresponding to interaction 502.

Interactions 501-506 can include a date and/or time associated with performing the interaction. Interactions 501-506 can include a confidence score which may indicate a confidence associated with the interaction, such as a confidence that the LLM output is correct. Interactions 501-506 can include one or more of a payload, a thought, a chosen tool, and a response. A payload can indicate an input for a tool, such as a string for the agent to provide to a data processing service to implement a tool call. The LLM can generate the payload (e.g., with proper formatting based on prompts provided to the LLM) and provide the payload to the agent. A thought may comprise an output from an LLM that can indicate, in natural language form, one or more actions to be performed. In some implementations, the thought may indicate a reason for performing one or more actions. The chosen tool can indicate a tool selected (e.g., by the LLM) to perform one or more actions. The agent can implement the chosen tool by providing a tool call (e.g., payload) to a data processing service. The response may comprise an LLM output which may include natural language generated by the LLM and/or data corresponding to a tool output. For example, the agent may provide a data output from a data processing service pursuant to a tool call to the LLM which the LLM can parse and format in a natural language and output as the response. In some implementations, the response can indicate a prompt provided to the LLM by the agent (e.g., which may be parsed and returned by the LLM as a response), such as may be shown at interaction 501.

As shown by the response at interaction 501 (which may be generated by the LLM pursuant to an initial prompt provided to the LLM), this run or series of interactions 501-506 relates to onboarding a customer, which is provided as an example. As further shown in the response of interaction 501, the initial prompt may indicate to the LLM to access data to complete the run (e.g., data associated with a person or entity that is to be onboarded as a customer) as well as a type of the data (e.g., "onboRequest"), a data identifier (e.g., primary_key: "b2b2b2"), and a location of the data (e.g., ontology_rid: "ri.ontology.main.ontology.123").

As shown in the thought at interaction 502, the LLM indicates an action to be performed, including retrieving the specified data object (e.g., by implementing a tool call). The LLM can generate the payload which at this interactions includes a tool call to retrieve the specified data. The LLM can provide the payload to the agent which the agent can provide to a data processing service to implement as a tool call. The agent can return the results of the tool call to the LLM which the LLM can parse and return as the response which at this interaction shows properties of the specified data object that was retrieved. For example, the data object property "country" is "US" and the property "city" is "Philadelphia". The data object property "industry" is blank indicating that data is missing.

At interaction 503 the LLM can generate a tool call (e.g., payload) to store the data retrieved at interaction 502 to the accessories (e.g., to the agent storage). At interaction 504 the LLM can read the data previously stored in the agent storage at interaction 503 to determine whether the data is complete. At interaction 505 the LLM determines that the data is incomplete because the industry field is empty and can generate a tool call to cause the agent to transition to a subsequent state (e.g., request data state 520). The LLM can determine a subsequent state based on a set of possible subsequent states defined in the current state (e.g., initial state 510) as well as rules or logic defined in the current state (which can be included in a prompt provided to the LLM). For example, the LLM may determine to transition to the request data state 520 because the data is incomplete.

At interaction 506 the LLM can generate a tool call to cause a notification to send to a user relating to the incomplete data. The notification can include a summary of the missing data and a hyperlink where the missing data can be added by the user. The run can continue at subsequent interactions. For example, the LLM can determine a subsequent state to execute. In some implementations, the run may continue to subsequent states regardless of whether a user responds to the request for missing data. In some implementations, the run may wait to proceed to a subsequent state based on whether the user responds to the request for missing data. In some implementations, the run may terminate immediately pursuant to interaction 506.

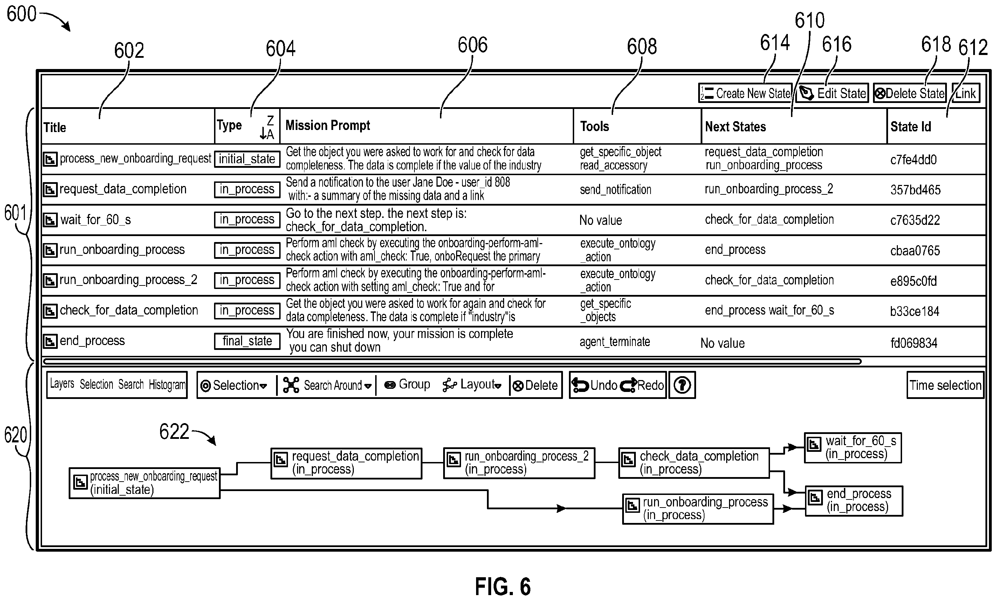

FIG. 6 illustrates an example user interface 600 for managing a state machine. An agent system, such user interface module 104 of agent system 102 shown and/or described herein, can generate user interface data for rendering user interface 600. A user can interact with user interface 600 to create and/or edit state machines. The user interface 600 can include two portions such as an information portion 601 and a visualization portion 620. The information portion 601 may be positioned above the visualization portion 620.

The information portion 601 can display information relating to a state machine or individual states of the state machine. For example, the information portion 601 can display one or more rows each associated with a state of a state machine. The information portion 601 can further display one or more columns to arrange the information associated with each state of the state machine. In this example, the information portion 601 displays a title column 602, a type column 604, a prompt column 606, a tools column 608, a next states column 610, and a state ID column 612. The title column 602 can display titles of states in the state machine. The type column 604 can display a type associated with each state. Possible state types include an initial type, an in-process type, and a final type. The prompt column 606 can display prompts associated with each state which can be provided by the agent to the LLM. Each state may be associated with one prompt. Tools column 608 can display one or more tools (or no tools) associated with each state. The tools associated with each state may be the closed set of tools available for implementation at the particular state. Advantageously, limiting the number of tools available at each state may reduce the possibility of errors when performing a run. The next states column 610 can display one or more states (or no states) available for subsequent execution (e.g., immediately after execution of the current state). The next states associated with each state may be the closed set of next states available for subsequent execution. Advantageously, limiting the number of next states available at each current state may reduce the possibility of errors when performing a run. The state ID column 612 can display an ID associated with each state which may comprise metadata for retrieving the state from storage.

A user can create new states to add to a state machine by selecting button 614. A user can edit an existing state by selecting button 616. For example, a user may edit the information of any of the states displayed in columns 602-612. For example, a user may add or delete tools associated with a state, add or delete next states associated with a state, edit a prompt of a state, etc. A user can delete a state from a state machine by selecting button 618.

The visualization portion 620 can display a visualization 622 of the state machine displayed in information portion 601. The visualization 622 can include nodes representing states and directed edges representing a process flow between the states. The visualization 622 may update based on information in the information portion 601 in real-time (e.g., as a user manipulates the information portion 601). For example, if the user adds a new state to the information portion 601 and adds that new state as one of the possible next states in the next state column 610 for the "process_new_onboarding_request" state, the visualization 622 can update to display a new node representing the new state with a directed edge proceeding from the "process_new_onboarding_request" node to the new node. Accordingly, interacting with the information portion 601 may cause the visualization portion 620 to update. In some implementations, interacting with the visualization portion 620 may cause the information portion 601 to update. For example, a user may add a new node in the visualization portion 620 and a new directed edge proceeding from the "process_new_onboarding_request" node to the new node which may cause the information portion 601 to display a new row with the new state and an indication of new state as one of the possible next states in the next state column 610 for the "process_new_onboarding_request" state.

Creating a state machine, such as via user interface 600, can include creating a version of the state machine. For example, a user may develop a state machine via user interface 600 and may create the state machine along with a version of that state machine. An agent system may store the state machine and its associated version such as in a database module. The agent system may then store any subsequent editing to the state machine (e.g., via user interface 600) as a different version while retaining the original state machine as the original version. Accordingly, multiple versions of a state machine may exist simultaneously (e.g., for editing and/or operation) which may facilitate state machine development.

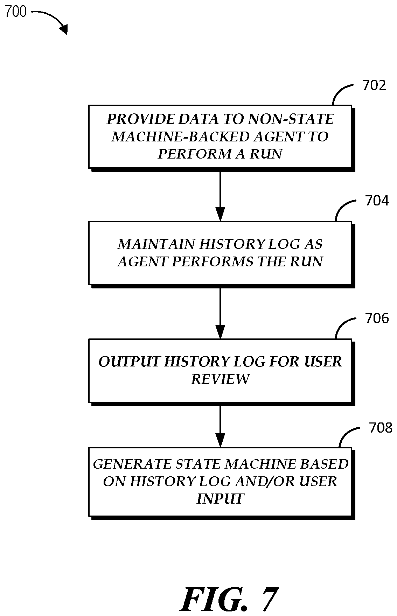

FIG. 7 is a flowchart illustrating an example process 700 for promoting agent operations to a state machine. This process, in full or parts, can be executed by one or more hardware processors, whether they're associated with a singular or multiple computing devices, such as agent system 102, and even devices in remote or wireless communication. The implementation may vary. For example, process 700 can involve modifications like omitting blocks, adding blocks, and/or rearranging the order of execution of the blocks. Process 700 serves as an example and isn't intended to limit the scope of present disclosure.

At block 702 an agent system can provide data or resources to a non-state machine-backed agent to perform a run. The data can include all of the tools, LLMs, accessible database, data processing services, sub-agents, prompts, etc. which are available for the agent to potentially use to perform the run. The agent can perform the run without the use of a state machine which may require the agent to iteratively decide on operations to perform during the run. For example, because the agent does not execute a state machine during the run, the path of operations to complete the run may be unknown and the agent can perform a series of operations with the LLM attempting to complete the run. If the agent (e.g., by the LLM) eventually determines that the series of operations are useless to complete the run, the agent can recommence a different series of operations in a new attempt to complete the run. As discussed herein, performing a run without a state machine may be inefficient, at least because the agent may perform more operations to complete the run because the agent does not have a structure process for performing the run.

At block 704 the agent system can maintain a history log as the agent performs the run. The history log can include information associated with performing the run, including LLM prompts, tools that were implemented, and LLM outputs including "thoughts" or "reasons" relating to performing an operation which can indicate errors and/or decisions.

At block 706 the agent system can provide the history log to a user. The user can review the history log which can indicate the process the agent took to complete the run including prompts and outputs as well as decisions (e.g., made by the LLM) regarding which operations to perform, which tools to use, etc. The history log may also include information relating to whether the run was completed successfully, a number of agent-LLM interactions required to complete to run, a time required to complete, and/or whether user input was required to complete the run. The agent system can output the history log via a user interface. In some implementations, the history log may be displayed as a user interface which may include similar aspects or features shown and/or described with reference to user interface 500, although user interface 500 represents information relating to operations of a state-backed agent.

At block 708 the agent system can generate a state machine based on at least the history log and/or user input which may be referred to as "promoting" a run to a state machine. In some implementations, the agent system may promote a run to a state machine responsive to a user indication. In some implementations, the agent system may automatically promote a run to a state machine based on one or more criteria. For example, the agent system may promote a run to a state machine if the agent successfully completed the run within a threshold number of agent-LLM interactions, within a threshold time, and/or without user input. The agent system can promote an entire run to a state machine, which can include user revisions. In some implementations, the agent system can promote portions of the run to aspects of a state machine. For example, the agent system can promote agent-LLM interaction(s) within a run to state(s), whether or not they are promoted as a complete state machine. As another example, the agent system can generate as set of available tools defined within a state based on the tools that were implemented during the run. As another example, the agent system can generate a set of available next states defined within a state based on a series of operations or interactions performed during the run. As another example, the agent system can promote aspects of LLM outputs within a run, such as "thoughts" or "reasons", to decision logic relating to which operations to perform within a state machine and/or as prompts associated with a state. Such decision logic can be included in prompts associated with each state and an LLM can access the decision logic in the prompt it has been provided to determine a next state to execute. The agent system can promote revised aspects of LLM outputs. For example, a user may revise an LLM output to be reworded and/or reformatted as a prompt in a state machine. As another example, the agent system can provide an LLM output to an LLM to be reworded and/or reformatted as a prompt in a state machine.

### Additional Example Implementations and Details

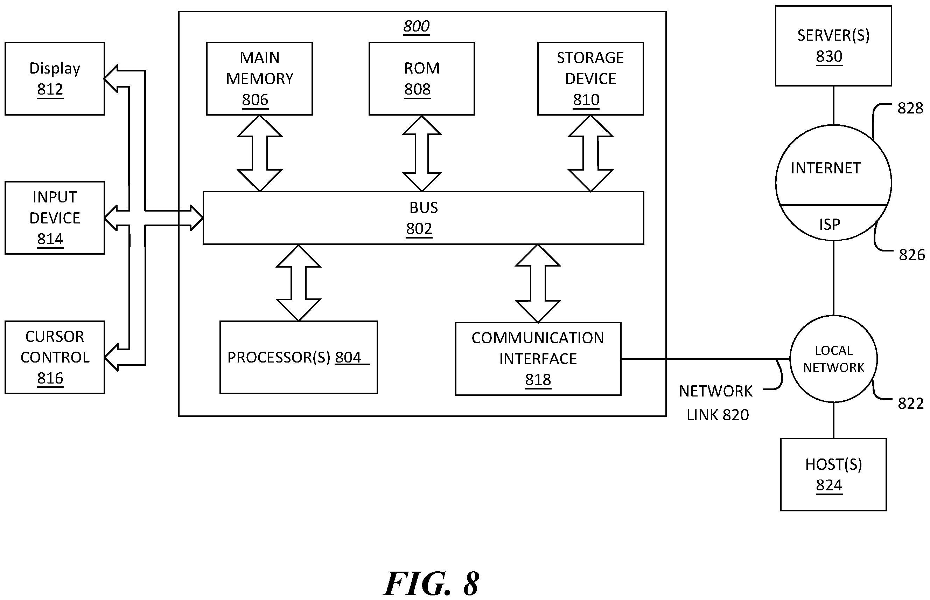

In an implementation of the system (e.g., one or more aspects of the agent system 102, one or more aspects of the computing environment 100, and/or the like) may comprise, or be implemented in, a "virtual computing environment". As used herein, the term "virtual computing environment" should be construed broadly to include, for example, computer-readable program instructions executed by one or more processors (e.g., as described in the example of FIG. 8) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may comprise one or more virtual machines, containers, and/or other types of emulations of computing systems or environments. In some implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, FIG. 8 shows a block diagram that illustrates a computer system 800 upon which various implementations and/or aspects (e.g., one or more aspects of the computing environment 100, one or more aspects of the agent system 102, one or more aspects of the user 150, one or more aspects of the data processing service 120, one or more aspects of the LLMs 130a and 130b, and/or the like) may be implemented. Multiple such computer systems 800 may be used in various implementations of the present disclosure. Computer system 1100 includes a bus 802 or other communication mechanism for communicating information, and a hardware processor, or multiple processors, 1004 coupled with bus 802 for processing information. Hardware processor(s) 804 may be, for example, one or more general purpose microprocessors.

Computer system 800 also includes a main memory 806, such as a random-access memory (RAM), cache and/or other dynamic storage devices, coupled to bus 802 for storing information and instructions to be executed by processor 804. Main memory 806 also may be used for storing temporary variables or other intermediate information during execution of instructions to be executed by processor 804. Such instructions, when stored in storage media accessible to processor 804, render computer system 800 into a special-purpose machine that is customized to perform the operations specified in the instructions. The main memory 806 may, for example, include instructions to implement server instances, queuing modules, memory queues, storage queues, user interfaces, and/or other aspects of functionality of the present disclosure, according to various implementations.

Computer system 800 further includes a read only memory (ROM) 1008 or other static storage device coupled to bus 802 for storing static information and instructions for processor 804. A storage device 810, such as a magnetic disk, optical disk, or USB thumb drive (Flash drive), and/or the like, is provided and coupled to bus 802 for storing information and instructions.

Computer system 800 may be coupled via bus 802 to a display 812, such as a cathode ray tube (CRT) or LCD display (or touch screen), for displaying information to a computer user. An input device 814, including alphanumeric and other keys, is coupled to bus 802 for communicating information and command selections to processor 804. Another type of user input device is cursor control 816, such as a mouse, a trackball, or cursor direction keys for communicating direction information and command selections to processor 804 and for controlling cursor movement on display 812. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computer system 800 may include a user interface module to implement a GUI that may be stored in a mass storage device as computer executable program instructions that are executed by the computing device(s). Computer system 800 may further, as described below, implement the techniques described herein using customized hard-wired logic, one or more ASICs or FPGAs, firmware and/or program logic which in combination with the computer system causes or programs computer system 800 to be a special-purpose machine. According to one implementation, the techniques herein are performed by computer system 800 in response to processor(s) 804 executing one or more sequences of one or more computer-readable program instructions contained in main memory 806. Such instructions may be read into main memory 806 from another storage medium, such as storage device 810. Execution of the sequences of instructions contained in main memory 806 causes processor(s) 804 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 804 for execution. For example, the instructions may initially be carried on a magnetic disk or solid-state drive of a remote computer. The remote computer can load the instructions into its dynamic memory and send the instructions over a telephone line using a modem. A modem local to computer system 800 can receive the data on the telephone line and use an infra-red transmitter to convert the data to an infra-red signal. An infra-red detector can receive the data carried in the infra-red signal and appropriate circuitry can place the data on bus 802. Bus 802 carries the data to main memory 806, from which processor 804 retrieves and executes the instructions. The instructions received by main memory 806 may optionally be stored on storage device 810 either before or after execution by processor 804.

Computer system 800 also includes a communication interface 818 coupled to bus 802. Communication interface 818 provides a two-way data communication coupling to a network link 820 that is connected to a local network 822. For example, communication interface 818 may be an integrated services digital network (ISDN) card, cable modem, satellite modem, or a modem to provide a data communication connection to a corresponding type of telephone line. As another example, communication interface 818 may be a local area network (LAN) card to provide a data communication connection to a compatible LAN (or WAN component to communicated with a WAN). Wireless links may also be implemented. In any such implementation, communication interface 818 sends and receives electrical, electromagnetic, or optical signals that carry digital data streams representing various types of information.

Network link 820 typically provides data communication through one or more networks to other data devices. For example, network link 820 may provide a connection through local network 822 to a host computer 824 or to data equipment operated by an Internet Service Provider (ISP) 826. ISP 826 in turn provides data communication services through the worldwide packet data communication network now commonly referred to as the "Internet" 1028. Local network 822 and Internet 828 both use electrical, electromagnetic, or optical signals that carry digital data streams. The signals through the various networks and the signals on network link 820 and through communication interface 818, which carry the digital data to and from computer system 800, are example forms of transmission media.

Computer system 800 can send messages and receive data, including program code, through the network(s), network link 820 and communication interface 818. In the Internet example, a server 830 might transmit a requested code for an application program through Internet 828, ISP 826, local network 822 and communication interface 818.

The received code may be executed by processor 804 as it is received, and/or stored in storage device 810, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.
Clause 1. A computerized method, performed by a computing system having one or more hardware computer processors and one or more non-transitory computer readable storage device storing software instructions executable by the computing system to perform the computerized method comprising: by an agent service configured to interact with an LLM to complete a run: accessing a state machine comprising a plurality of states, each state of the plurality of states comprising a prompt, one or more tools, and an indication of one or more next states; executing an initial state of the state machine by at least: providing an initial state prompt to the LLM comprising natural language text configured to cause the LLM to perform a task, the initial state prompt further comprising information relating to accessing the state machine and information relating to accessing a dataset to complete the run; causing a data processing service to implement an initial state tool to retrieve the dataset based on an LLM tool call generated by the LLM responsive to the initial state prompt; determining a subsequent state of the state machine based on at least an initial LLM output generated by the LLM responsive to the LLM accessing the state machine according to decision logic of the initial prompt; and storing the dataset or the initial LLM output to an agent storage for retrieval during the run; and executing the subsequent state of the state machine by at least: providing a subsequent state prompt to the LLM to cause the LLM to perform a subsequent task, the subsequent state prompt based on the subsequent state of the state machine; and accessing a subsequent LLM output generated by the LLM responsive to the subsequent state prompt.
Clause 2. The computerized method of clause 1, further comprising generating the state machine based on accessing historical data associated with a historical run of the agent service with the LLM, the historical run comprising a plurality of non-state-based interactions between the agent service and the LLM iteratively performed by the agent service to complete the historical run.
Clause 3. The computerized method of clause 2, further comprising generating the initial state prompt or the subsequent state prompt based on at least a historical LLM response.
Clause 4. The computerized method of clause 2, further comprising generating the initial state prompt or the subsequent state prompt by providing a historical LLM response to the LLM to update a content or a format of the historical LLM response.
Clause 5. The computerized method of clause 1, further comprising determining a failure of the subsequent state based on comparing the subsequent LLM output with the dataset or the initial LLM output stored in the agent storage.
Clause 6. The computerized method of clause 1, further comprising, by the agent service: in response to determining a failure of the subsequent state, generating a notification to a user requesting user input.
Clause 7. The computerized method of clause 1, further comprising, by the agent service: in response to determining a failure of the subsequent state, executing another state of the state machine.
Clause 8. The computerized method of clause 1, further comprising displaying a visualization of the state machine to a user, the visualization of the state machine comprising: a plurality of nodes associated with the plurality of states; and directed edges between the plurality of nodes indicating a process flow of the state machine.
Clause 9. The computerized method of clause 8, further comprising updating the visualization of the state machine in response to a user input to modify the state machine.
Clause 10. The computerized method of clause 1, further comprising in response to user input to modify the state machine, modifying one or more of the prompt, the one or more tools, or the indication of one or more next states.
Clause 11. A system comprising: a computer readable storage medium having program instructions embodied therewith; and one or more processors configured to execute the program instructions to cause the system to perform the computerized method of any of clauses 1-10.
Clause 12. A computer program product comprising a computer-readable storage medium having program instructions embodied therewith, the program instructions executable by one or more processors to cause the one or more processors to perform the computerized method of any of clauses 1-10.
Clause 13. A computerized method, performed by a computing system having one or more hardware computer processors and one or more non-transitory computer readable storage device storing software instructions executable by the computing system to perform the computerized method comprising: providing an agent service with access to resources to solve a problem with an LLM during a run, the resources comprising at least available tools, data processing services, databases, or an initial prompt; causing the agent service to perform the run including interacting with the LLM by providing prompts to the LLM and receiving outputs from the LLM; maintaining a history log of interactions between the agent service and the LLM during the run, the history log comprising the prompts provided to the LLM by the agent, the outputs received by the agent from the LLM, and one or more tools implemented during the run; and generating a state machine based on the interactions in the history log, the state machine comprising a plurality of states executable by the agent to perform another run by interacting with the LLM.
Clause 14. The computerized method of clause 13, further comprising generating the state machine by generating at least a prompt, a set of tools, and a set of next states associated with each of the plurality of states.
Clause 15. The computerized method of clause 13, further comprising outputting the history log to a user and generating the state machine based on a user modification to one or more of the prompts, the outputs, or the one or more tools in the history log.
Clause 16. The computerized method of clause 13, further comprising generating the state machine based on providing one or more of the prompts or the outputs in the history log to the LLM to update a content or a format of the prompts or the outputs.
Clause 17. A system comprising: a computer readable storage medium having program instructions embodied therewith; and one or more processors configured to execute the program instructions to cause the system to perform the computerized method of any of clauses 13-16.
Clause 18. A computer program product comprising a computer-readable storage medium having program instructions embodied therewith, the program instructions executable by one or more processors to cause the one or more processors to perform the computerized method of any of clauses 13-16.

## Claims

1. A computerized method, performed by a computing system having one or more hardware computer processors and one or more non-transitory computer readable storage device storing software instructions executable by the computing system to perform the computerized method comprising:
by an agent service configured to interact with an LLM to complete a run:
accessing a state machine comprising a plurality of states, each state of the plurality of states comprising a prompt, one or more tools, and an indication of one or more next states;
executing an initial state of the state machine by at least:
providing an initial state prompt to the LLM comprising natural language text configured to cause the LLM to perform a task, the initial state prompt further comprising information relating to accessing the state machine and information relating to accessing a dataset to complete the run;
causing a data processing service to implement an initial state tool to retrieve the dataset based on an LLM tool call generated by the LLM responsive to the initial state prompt;
determining a subsequent state of the state machine based on at least an initial LLM output generated by the LLM responsive to the LLM accessing the state machine according to decision logic of the initial prompt; and
storing the dataset or the initial LLM output to an agent storage for retrieval during the run; and
executing the subsequent state of the state machine by at least:
providing a subsequent state prompt to the LLM to cause the LLM to perform a subsequent task, the subsequent state prompt based on the subsequent state of the state machine; and
accessing a subsequent LLM output generated by the LLM responsive to the subsequent state prompt.

2. The computerized method of claim 1, further comprising generating the state machine based on accessing historical data associated with a historical run of the agent service with the LLM, the historical run comprising a plurality of non-state-based interactions between the agent service and the LLM iteratively performed by the agent service to complete the historical run.

3. The computerized method of claim 2, further comprising generating the initial state prompt or the subsequent state prompt based on at least a historical LLM response, and optionally, comprising generating the initial state prompt or the subsequent state prompt by providing a historical LLM response to the LLM to update a content or a format of the historical LLM response.

4. The computerized method of claim any preceding claim, further comprising determining a failure of the subsequent state based on comparing the subsequent LLM output with the dataset or the initial LLM output stored in the agent storage.

5. The computerized method of any preceding claim, further comprising, by the agent service:
in response to determining a failure of the subsequent state, generating a notification to a user requesting user input, or
in response to determining a failure of the subsequent state, executing another state of the state machine.

6. The computerized method of any preceding claim, further comprising displaying a visualization of the state machine to a user, the visualization of the state machine comprising:
a plurality of nodes associated with the plurality of states; and
directed edges between the plurality of nodes indicating a process flow of the state machine, and optionally, further comprising updating the visualization of the state machine in response to a user input to modify the state machine.

7. The computerized method of any preceding claim, further comprising in response to user input to modify the state machine, modifying one or more of the prompt, the one or more tools, or the indication of one or more next states.

8. A system comprising:
a computer readable storage medium having program instructions embodied therewith; and
one or more processors configured to execute the program instructions to cause the system to perform the computerized method of any of claims 1-7.

9. A computer program product comprising a computer-readable storage medium having program instructions embodied therewith, the program instructions executable by one or more processors to cause the one or more processors to perform the computerized method of any of claims 1-7.

10. A computerized method, performed by a computing system having one or more hardware computer processors and one or more non-transitory computer readable storage device storing software instructions executable by the computing system to perform the computerized method comprising:
providing an agent service with access to resources to solve a problem with an LLM during a run, the resources comprising at least available tools, data processing services, databases, or an initial prompt;
causing the agent service to perform the run including interacting with the LLM by providing prompts to the LLM and receiving outputs from the LLM;
maintaining a history log of interactions between the agent service and the LLM during the run, the history log comprising the prompts provided to the LLM by the agent, the outputs received by the agent from the LLM, and one or more tools implemented during the run; and
generating a state machine based on the interactions in the history log, the state machine comprising a plurality of states executable by the agent to perform another run by interacting with the LLM.

11. The computerized method of claim 10, further comprising generating the state machine by generating at least a prompt, a set of tools, and a set of next states associated with each of the plurality of states.

12. The computerized method of claim 10 or claim 11, further comprising outputting the history log to a user and generating the state machine based on a user modification to one or more of the prompts, the outputs, or the one or more tools in the history log.

13. The computerized method of any of claims 10-12, further comprising generating the state machine based on providing one or more of the prompts or the outputs in the history log to the LLM to update a content or a format of the prompts or the outputs.

14. A system comprising:
a computer readable storage medium having program instructions embodied therewith; and
one or more processors configured to execute the program instructions to cause the system to perform the computerized method of any of claims 10-13.

15. A computer program product comprising a computer-readable storage medium having program instructions embodied therewith, the program instructions executable by one or more processors to cause the one or more processors to perform the computerized method of any of claims 10-14.
